# EUROPEAN PATENT APPLICATION

(11) **EP 4 694 408 A1**
(43) Date of publication of application: **11.02.2026**
(21) Application number: 24802847.4
(22) Date of filing: 29.04.2024
(51) Int. Cl.: H04W 56/00, H04W 72/0446

(54) **COMMUNICATION METHOD AND RELATED DEVICE**

(30) Priority: 05.05.2023 CN 202310508081
(71) Applicant: Huawei Technologies Co., Ltd., Shenzhen, Guangdong 518129 (CN)
(72) Inventor: GUO, Yuchen, Shenzhen, Guangdong 518129 (CN); LI, Yunbo, Shenzhen, Guangdong 518129 (CN); GAN, Ming, Shenzhen, Guangdong 518129 (CN)
(74) Representative: Goddar, Heinz J.
(86) International application number: PCT/CN2024/090679
(87) International publication number: WO 2024/230565

(57) **Abstract**

A communication method and a related apparatus are provided, relate to the field of communication technologies, and may be applied to a wireless local area network system that supports 802.11 series protocols such as a next-generation Wi-Fi protocol of IEEE 802.11ax, like 802.11be, Wi-Fi 7, or EHT, and a next generation of 802.11be, like Wi-Fi 8, UHR, or Wi-Fi AI; and may be further applied to a WPAN system, a sensing system, or the like that supports UWB. A first AP generates and sends a first communication frame, and a first non-AP STA receives and parses the first communication frame. The first communication frame includes first information and second information, the first information indicates first time information corresponding to the first AP, and the second information indicates an offset between the first time information and start time of an RTWT SP of a second AP. According to the method, the start time of the RTWT SP of the second AP can be determined.

## Description

This application claims priority to Chinese Patent Application No. 202310508081.5, filed with the China National Intellectual Property Administration on May 5, 2023 and entitled "COMMUNICATION METHOD AND RELATED APPARATUS", which is incorporated herein by reference in its entirety.

### TECHNICAL FIELD

This application relates to the field of communication technologies, and in particular, to a communication method and a related apparatus.

### BACKGROUND

With development of wireless networks and popularization of wireless local area network (wireless local area network, WLAN) technologies, WLAN devices become increasingly dense. Because radio access points (access point, AP) are easy to deploy, increasingly dense APs also cause more inter-cell interference. Coordination between multiple APs can reduce inter-cell interference and improve quality of service for a user.

Currently, for restricted target wake time (restricted target wake time, RTWT), an AP 1 may broadcast RTWT information of a neighboring AP (namely, an AP 2), so that a non-access point station (non-access point station, non-AP STA) associated with the AP 1 terminates a transmission opportunity (transmission opportunity, TXOP) before an RTWT service period (service period, SP) of the AP 2 arrives. In this way, the AP 2 can successfully obtain a channel through contention when the RTWT SP starts, ensuring low-latency service communication of the AP 2.

However, the non-AP STA cannot correctly obtain start time of the RTWT SP of the AP 2. Consequently, low-latency service communication of the AP 2 cannot be ensured.

### SUMMARY

Embodiments of this application provide a communication method and a related apparatus, so that a non-AP STA can correctly obtain start time of an RTWT SP of an AP 2, ensuring low-latency service communication of the AP 2.

According to a first aspect, an embodiment of this application provides a communication method, and the method may be performed by a communication apparatus. The communication apparatus may be a device, or may be a chip (system) or a circuit used for the device. This is not limited in this application. The method includes:
generating a first communication frame, where the first communication frame includes first information and second information, the first information indicates first time information corresponding to a first access point AP, the second information indicates an offset between the first time information and second time information, and the second time information is start time of a restricted target wake time service period RTWT SP of a second AP; and
sending the first communication frame.

In this embodiment of this application, a communication method is provided. The first access point (an AP 1) generates the first communication frame, and sends the first communication frame to a first non-access point station (a non-AP STA 1) associated with the AP 1. The AP 1 herein may alternatively be a processor/chip that can be configured to execute computer-executable instructions. This is not limited in this embodiment of this application.

The first communication frame in this embodiment of this application includes the first information and the second information. The first information indicates the first time information corresponding to the AP 1, and the first time information may be specifically a time unit (time unit, TU) boundary that is of the AP 1 and that is indicated based on a time synchronization function timer (time synchronization function timer, TSF timer, or TSF for short) of the AP 1. The TU boundary herein refers to an 11^{th} bit to a 26^{th} bit in the TSF timer. The second information indicates the offset between the first time information and the second time information, the second time information is the start time of the restricted target wake time service period RTWT SP of the second access point (an AP 2), and the AP 2 and the AP 1 are different APs.

In a current multi-AP communication scenario, because TSF timers of different APs are independently selected, TU boundaries of the different APs may not be aligned. As a result, the non-AP STA 1 associated with the AP 1 cannot correctly obtain the start time of the RTWT SP of the AP 2 during communication with the AP 1, and cannot terminate a TXOP before the RTWT SP of the AP 2 arrives. Consequently, the AP 2 cannot successfully obtain a channel through contention when the RTWT SP starts, and low-latency service communication of the AP 2 cannot be ensured.

However, in this embodiment of this application, the start time (the second time information) of the RTWT SP of the AP 2 may be determined based on the first information (the first time information) and the second information (the offset between the first time information and the second time information) in the first communication frame, and the non-AP STA 1 associated with the AP 1 may terminate the TXOP before the RTWT SP of the AP 2 arrives, so that the AP 2 successfully obtains a channel through contention when the RTWT SP starts, ensuring low-latency service communication of the AP 2.

According to a second aspect, an embodiment of this application provides a communication method, and the method may be performed by a communication apparatus. The communication apparatus may be a device, or may be a chip (system) or a circuit used for the device. This is not limited in this application. The method includes:
receiving a first communication frame, where the first communication frame includes first information and second information, the first information indicates first time information corresponding to a first access point AP, the second information indicates an offset between the first time information and second time information, and the second time information is start time of a restricted target wake time service period RTWT SP of a second AP; and
parsing the first communication frame.

In this embodiment of this application, a communication method is provided. A first non-access point station (a non-AP STA 1) associated with the first access point (an AP 1) receives the first communication frame from the AP 1, and parses the first communication frame. The non-AP STA 1 herein may alternatively be a processor/chip that can be configured to execute computer-executable instructions. This is not limited in this embodiment of this application.

The first communication frame in this embodiment of this application includes the first information and the second information. The first information indicates the first time information corresponding to the AP 1, and the first time information may be specifically a time unit (time unit, TU) boundary that is of the AP 1 and that is indicated based on a time synchronization function timer (time synchronization function timer, TSF timer, or TSF for short) of the AP 1. The TU boundary herein refers to an 11^{th} bit to a 26^{th} bit in the TSF timer. The second information indicates the offset between the first time information and the second time information, the second time information is the start time of the restricted target wake time service period RTWT SP of the second access point (an AP 2), and the AP 2 and the AP 1 are different APs.

In a current multi-AP communication scenario, because TSF timers of different APs are independently selected, TU boundaries of the different APs may not be aligned. As a result, the non-AP STA 1 associated with the AP 1 cannot correctly obtain the start time of the RTWT SP of the AP 2 during communication with the AP 1, and cannot terminate a TXOP before the RTWT SP of the AP 2 arrives. Consequently, the AP 2 cannot successfully obtain a channel through contention when the RTWT SP starts, and low-latency service communication of the AP 2 cannot be ensured.

However, in this embodiment of this application, the start time (the second time information) of the RTWT SP of the AP 2 may be determined based on the first information (the first time information) and the second information (the offset between the first time information and the second time information) in the first communication frame, and the non-AP STA 1 associated with the AP 1 may terminate the TXOP before the RTWT SP of the AP 2 arrives, so that the AP 2 successfully obtains a channel through contention when the RTWT SP starts, ensuring low-latency service communication of the AP 2.

With reference to the first aspect or the second aspect, in a possible implementation, the second information includes first indication information, the first indication information includes M bits of the time synchronization function timer TSF timer of the first AP, the TSF timer of the first AP corresponds to the second time information, and the M bits are a part or all of 10 least significant bits of the TSF timer of the first AP.

In this implementation of this application, a possible specific implementation of the second information is provided. Specifically, the second information includes the first indication information, and the first indication information may be a part or all of the 10 least significant bits of the TSF timer of the first AP corresponding to the start time of the RTWT SP of the second AP. It may be understood that time precision that may be indicated by the first indication information varies with a quantity of bits included in the first indication information. According to this embodiment of this application, the offset between the first time information (the TU boundary of the first AP) and the second time information (the start time of the RTWT SP of the second AP) may be obtained based on an indication of the first indication information, and further, the start time of the RTWT SP of the second AP may be determined based on the first information (the first time information, that is, the TU boundary of the first AP) and the first indication information (the offset between the first time information and the second time information), and the first non-AP STA associated with the first AP may terminate the TXOP before the RTWT SP of the second AP arrives. In this way, the second AP successfully obtains a channel through contention when the RTWT SP starts, ensuring low-latency service communication of the second AP.

With reference to the first aspect or the second aspect, in a possible implementation, the first communication frame includes a target wake time TWT element, and the target wake time TWT element includes the second information.

In this implementation of this application, a possible specific implementation of carrying the second information is provided. Specifically, the second information may be carried in the target wake time (target wake time, TWT) element in the first communication frame, and a field in the TWT element is reused to carry the second information, so that the offset between the first time information and the second time information can be indicated, and signaling overheads can be reduced to some extent.

With reference to the first aspect or the second aspect, in a possible implementation, the TWT element in the first communication frame includes a broadcast TWT parameter set, and the second information is carried in any one or more of the following locations in the broadcast TWT parameter set:
a 5^{th} byte in the broadcast TWT parameter set, a 4^{th} bit to an 8^{th} bit in a broadcast TWT information field in the broadcast TWT parameter set, and a first field after the broadcast TWT information field in the broadcast TWT parameter set.

In this implementation of this application, a possible specific implementation of carrying the second information is provided. Specifically, the second information may be carried in one or more locations in the broadcast TWT parameter set in the TWT element. For example, when there are sufficient idle fields in the broadcast TWT parameter set, the second information may be carried in a 5^{th} byte in the broadcast TWT parameter set, or a 4^{th} bit to an 8^{th} bit in the broadcast TWT information field in the broadcast TWT parameter set; or when there are no sufficient idle fields in the broadcast TWT parameter set, the second information may be carried in a first field after the broadcast TWT information field in the broadcast TWT parameter set, where the first field may be an existing field after the broadcast TWT information field in the broadcast TWT parameter set is reused, or may be a newly added field, used to carry the second information.

With reference to the first aspect or the second aspect, in a possible implementation, the second information includes second indication information, the second indication information includes N bits, a value of the N bits is an integer ranging from 0 to 1023, N is a positive integer less than or equal to 10, and the value of the N bits indicates the offset between the first time information and the second time information.

In this implementation of this application, a possible specific implementation of the second information is provided. Specifically, the second information includes the second indication information. The second indication information may be 10 bits, or may be less than 10 bits, and a value of the second indication information is an integer ranging from 0 to 1023. It may be understood that the second indication information indicates, by using N bits, the offset between the TU boundary of the first AP and the start time of the RTWT SP of the second AP, and time precision that may be indicated by the second indication information varies with a quantity of bits included in the second indication information. According to this embodiment of this application, the offset between the first time information (the TU boundary of the first AP) and the second time information (the start time of the RTWT SP of the second AP) may be obtained based on an indication of the second indication information, and further, the start time of the RTWT SP of the second AP may be determined based on the first information (the first time information, that is, the TU boundary of the first AP) and the second indication information (the offset between the first time information and the second time information), and the first non-AP STA associated with the first AP may terminate the TXOP before the RTWT SP of the second AP arrives. In this way, the second AP successfully obtains a channel through contention when the RTWT SP starts, ensuring low-latency service communication of the second AP.

With reference to the first aspect or the second aspect, in a possible implementation, the second time information is determined based on RTWT information of the second AP, and the RTWT information of the second AP is from a communication frame of the second AP.

In this implementation of this application, a possible specific implementation of determining the second time information is provided. Specifically, a beacon frame or a probe response frame sent by the second AP may be received, the RTWT information of the second AP may be read from the beacon frame or the probe response frame, and the second time information may be determined based on the RTWT information of the second AP. It may be understood that, because time that is indicated by a TWT field in the RTWT information of the second AP and that is in the beacon frame or the probe response frame sent by the second AP is indicated based on a TSF timer of the second AP, the time further needs to be converted, so that the time indicated by the TWT field is indicated based on the TSF timer of the first AP.

With reference to the first aspect or the second aspect, in a possible implementation, the TWT element in the first communication frame includes third indication information, and the third indication information indicates that TWT information of the second AP exists in the TWT element.

In this implementation of this application, a possible specific implementation of the third indication information is provided. Specifically, the third indication information may be carried in the TWT element in the first communication frame, to indicate that the TWT element carries the TWT information of the second AP. It may be understood that, because the TWT element may carry a plurality of broadcast TWT parameter sets, the third indication information may indicate that the TWT element carries only the TWT information of the second AP; or the third indication information may alternatively indicate that some broadcast TWT parameter sets carry the TWT information of the second AP, and some other broadcast TWT parameter sets carry TWT information of the first AP.

With reference to the first aspect or the second aspect, in a possible implementation, the third indication information is carried in any one or more of the following locations in the TWT element:
an 8^{th} bit in a control field in the TWT element and a 16^{th} bit in a request type field in the broadcast TWT parameter set in the TWT element.

In this implementation of this application, a possible specific implementation of carrying the third indication information is provided. Specifically, the third indication information may be carried in one or more locations in the TWT element. For example, when the third indication information may be carried in an 8^{th} bit in the control field in the TWT element, the third indication information indicates that the TWT element carries only the TWT information of the second AP; or when the first indication information may be carried in a 16^{th} bit in the request type field in the broadcast TWT parameter set in the TWT element, the third indication information indicates that the broadcast TWT parameter set carries the TWT information of the second AP, and optionally, another broadcast TWT parameter set may carry the TWT information of the first AP, or may carry the TWT information of the second AP.

With reference to the first aspect or the second aspect, in a possible implementation, the first communication frame is a beacon frame; or
the first communication frame is a communication frame in response to a probe request frame, and the probe request frame is from the first non-access point station non-AP STA.

In this implementation of this application, a possible specific implementation of the first communication frame is provided. Specifically, the first communication frame may be a beacon frame, or may be a probe response frame. When the first communication frame is the probe response frame, before generating the first communication frame, the first AP further receives the probe request frame sent by the first non-AP STA.

According to a third aspect, an embodiment of this application provides a communication method. The method may be performed by a communication apparatus. The communication apparatus may be a device, or may be a chip (system) or a circuit used for the device. This is not limited in this application. The method includes:
generating a second communication frame, where the second communication frame includes third information and fourth information, the third information indicates third time information corresponding to a second access point AP, the fourth information indicates a part or all of bits of a time synchronization function timer TSF timer of the second AP, or indicates an offset between a TSF timer of the second AP and a TSF timer of a first AP, and the third time information corresponds to start time of a restricted target wake time service period RTWT SP of the second AP; and
sending the second communication frame.

In this embodiment of this application, a communication method is provided. The first access point (an AP 1) generates the second communication frame, and sends the second communication frame to a first non-access point station (a non-AP STA 1) associated with the AP 1. The AP 1 herein may alternatively be a processor/chip that can be configured to execute computer-executable instructions. This is not limited in this embodiment of this application.

The second communication frame in this embodiment of this application includes the third information and the fourth information. The third information indicates the third time information corresponding to the second AP (an AP 2), and the third time information may be specifically a TU boundary that is of the AP 2 and that is indicated based on the TSF timer of the AP 2. The TU boundary herein refers to an 11^{th} bit to a 26^{th} bit in the TSF timer. The third time information corresponds to the start time of the restricted target wake time service period RTWT SP of the AP 2. The fourth information indicates a part or all of the bits of the TSF timer of the AP 2, or indicates an offset or a difference between the TSF timer of the AP 2 and the TSF timer of the AP 1. The AP 2 and the AP 1 are different APs. It may be understood that, when the fourth information indicates different quantities of bits of the TSF timer of the AP 2, time precision and time ranges that may be indicated by the fourth information are different.

In a current multi-AP communication scenario, because TSF timers of different APs are independently selected, TU boundaries of the different APs may not be aligned. As a result, the non-AP STA 1 associated with the AP 1 cannot correctly obtain the start time of the RTWT SP of the AP 2 during communication with the AP 1, and cannot terminate a TXOP before the RTWT SP of the AP 2 arrives. Consequently, the AP 2 cannot successfully obtain a channel through contention when the RTWT SP starts, and low-latency service communication of the AP 2 cannot be ensured.

However, in this embodiment of this application, a part or all of the bits of the TSF timer of the AP 2 may be directly or indirectly obtained based on an indication of the fourth information, and then the start time of the RTWT SP of the AP 2 may be determined based on the third information (the third time information, that is, the TU boundary of the AP 2) and the fourth information (a part or all of the bits of the TSF timer of the AP 2) in the second communication frame, and the non-AP STA 1 associated with the AP 1 may terminate the TXOP before the RTWT SP of the AP 2 arrives, so that the AP 2 successfully obtains a channel through contention when the RTWT SP starts, ensuring low-latency service communication of the AP 2.

According to a fourth aspect, an embodiment of this application provides a communication method. The method may be performed by a communication apparatus. The communication apparatus may be a device, or may be a chip (system) or a circuit used for the device. This is not limited in this application. The method includes:
receiving a second communication frame, where the second communication frame includes third information and fourth information, the third information indicates third time information corresponding to a second access point AP, the fourth information indicates a part or all of bits of a time synchronization function timer TSF timer of the second AP, or indicates an offset between a TSF timer of the second AP and a TSF timer of a first AP, and the third time information corresponds to start time of a restricted target wake time service period RTWT SP of the second AP; and
parsing the second communication frame.

In this embodiment of this application, a communication method is provided. A first non-access point station (a non-AP STA 1) associated with the first access point (an AP 1) receives the second communication frame from the AP 1, and parses the second communication frame. The non-AP STA 1 herein may alternatively be a processor/chip that can be configured to execute computer-executable instructions. This is not limited in this embodiment of this application.

The second communication frame in this embodiment of this application includes the third information and the fourth information. The third information indicates the third time information corresponding to the second AP (an AP 2), and the third time information may be specifically a TU boundary that is of the AP 2 and that is indicated based on the TSF timer of the AP 2. The TU boundary herein refers to an 11^{th} bit to a 26^{th} bit in the TSF timer. The third time information corresponds to the start time of the restricted target wake time service period RTWT SP of the AP 2. The fourth information indicates a part or all of the bits of the TSF timer of the AP 2, or indicates an offset or a difference between the TSF timer of the AP 2 and the TSF timer of the AP 1. The AP 2 and the AP 1 are different APs. It may be understood that, when the fourth information indicates different quantities of bits of the TSF timer of the AP 2, time precision and time ranges that may be indicated by the fourth information are different.

In a current multi-AP communication scenario, because TSF timers of different APs are independently selected, TU boundaries of the different APs may not be aligned. As a result, the non-AP STA 1 associated with the AP 1 cannot correctly obtain the start time of the RTWT SP of the AP 2 during communication with the AP 1, and cannot terminate a TXOP before the RTWT SP of the AP 2 arrives. Consequently, the AP 2 cannot successfully obtain a channel through contention when the RTWT SP starts, and low-latency service communication of the AP 2 cannot be ensured.

However, in this embodiment of this application, a part or all of the bits of the TSF timer of the AP 2 may be directly or indirectly obtained based on an indication of the fourth information, and then the start time of the RTWT SP of the AP 2 may be determined based on the third information (the third time information, that is, the TU boundary of the AP 2) and the fourth information (a part or all of the bits of the TSF timer of the AP 2) in the second communication frame, and the non-AP STA 1 associated with the AP 1 may terminate the TXOP before the RTWT SP of the AP 2 arrives, so that the AP 2 successfully obtains a channel through contention when the RTWT SP starts, ensuring low-latency service communication of the AP 2.

With reference to the third aspect or the fourth aspect, in a possible implementation, the second communication frame includes a target wake time TWT element, and the target wake time TWT element includes the fourth information.

In this implementation of this application, a possible specific implementation of carrying the fourth information is provided. Specifically, the fourth information may be carried in the target wake time (target wake time, TWT) element in the second communication frame, and a field in the TWT element is reused to carry the fourth information, so that a part or all of the bits of the TSF timer of the second AP or the offset between the TSF timer of the second AP and the TSF timer of the first AP can be indicated, and signaling overheads can be reduced to some extent.

With reference to the third aspect or the fourth aspect, in a possible implementation, the TWT element in the second communication frame includes a broadcast TWT parameter set, and the fourth information is carried in any one or more of the following locations in the broadcast TWT parameter set:
a 5^{th} byte in the broadcast TWT parameter set, a 4^{th} bit to an 8^{th} bit in a broadcast TWT information field in the broadcast TWT parameter set, and a second field after the broadcast TWT information field in the broadcast TWT parameter set.

In this implementation of this application, a possible specific implementation of carrying the fourth information is provided. Specifically, the fourth information may be carried in one or more locations in the broadcast TWT parameter set in the TWT element. For example, when the fourth information indicates a small quantity of bits (for example, less than 13 bits) of the TSF timer of the second AP, and there are sufficient idle fields in the broadcast TWT parameter set, the fourth information may be carried in a 5^{th} byte in the broadcast TWT parameter set, or a 4^{th} bit to an 8^{th} bit in the broadcast TWT information field in the broadcast TWT parameter set; or when the fourth information indicates a large quantity of bits (for example, not less than 13 bits, or even all of the bits of the TSF timer of the second AP) of the TSF timer of the second AP, the fourth information may be carried in a second field after the broadcast TWT information field in the broadcast TWT parameter set, where the second field may be an existing field after the broadcast TWT information field in the broadcast TWT parameter set is reused, or may be a newly added field, used to carry the fourth information.

With reference to the third aspect or the fourth aspect, in a possible implementation, P most significant bits of the TSF timer of the second AP are the same as P most significant bits of the TSF timer of the first AP, and P is a positive integer less than 64.

In this implementation of this application, a possible specific implementation of a bit relationship between the TSF timer of the second AP and the TSF timer of the first AP is provided. Specifically, when the fourth information indicates a small quantity of bits (for example, less than 13 bits) of the TSF timer of the second AP, the P most significant bits of the TSF timer of the second AP are the same as the P most significant bits of the TSF timer of the first AP, that is, the TSF timer of the second AP and the TSF timer of the first AP keep the most significant bits the same. In this case, the first non-AP STA may obtain all of the bits of the TSF timer of the second AP based on most significant bits of the TSF timer of the first AP and fewer least significant bits of the TSF timer of the second AP, so that time indicated by a TWT field in an RTWT parameter of the second AP, that is, the start time of the RTWT SP of the second AP, can be determined based on the TU boundary of the second AP and the bits of the TSF timer of the second AP.

With reference to the third aspect or the fourth aspect, in a possible implementation, the TWT element in the second communication frame includes third indication information, and the third indication information indicates that TWT information of the second AP exists in the TWT element.

In this implementation of this application, a possible specific implementation of the third indication information is provided. Specifically, the third indication information may be carried in the TWT element in the second communication frame, to indicate that the TWT element carries the TWT information of the second AP. It may be understood that, because the TWT element may carry a plurality of broadcast TWT parameter sets, the third indication information may indicate that the TWT element carries only the TWT information of the second AP; or the third indication information may alternatively indicate that some broadcast TWT parameter sets carry the TWT information of the second AP, and some other broadcast TWT parameter sets carry TWT information of the first AP.

With reference to the third aspect or the fourth aspect, in a possible implementation, the third indication information is carried in any one or more of the following locations in the TWT element:
an 8^{th} bit in a control field in the TWT element and a 16^{th} bit in a request type field in the broadcast TWT parameter set in the TWT element.

In this implementation of this application, a possible specific implementation of carrying the third indication information is provided. Specifically, the third indication information may be carried in one or more locations in the TWT element. For example, when the third indication information may be carried in an 8^{th} bit in the control field in the TWT element, the third indication information indicates that the TWT element carries only the TWT information of the second AP; or when the first indication information may be carried in a 16^{th} bit in the request type field in the broadcast TWT parameter set in the TWT element, the third indication information indicates that the broadcast TWT parameter set carries the TWT information of the second AP, and optionally, another broadcast TWT parameter set may carry the TWT information of the first AP, or may carry the TWT information of the second AP.

With reference to the third aspect or the fourth aspect, in a possible implementation, the second communication frame is a beacon frame; or
the second communication frame is a communication frame in response to a probe request frame, and the probe request frame is from a first non-access point station non-AP STA.

In this implementation of this application, a possible specific implementation of the second communication frame is provided. Specifically, the second communication frame may be a beacon frame, or may be a probe response frame. When the second communication frame is the probe response frame, before generating the second communication frame, the first AP further receives the probe request frame sent by the first non-AP STA.

According to a fifth aspect, an embodiment of this application provides a communication method. The method may be performed by a communication apparatus. The communication apparatus may be a device, or may be a chip (system) or a circuit used for the device. This is not limited in this application. The method includes:
generating a third communication frame, where the third communication frame includes third information and fifth information, the third information indicates third time information corresponding to a second access point AP, the fifth information indicates an identifier of the second AP, there is a mapping relationship between the identifier of the second AP and a time synchronization function timer TSF timer of the second AP, and the third time information corresponds to start time of a restricted target wake time service period RTWT SP of the second AP; and
sending the third communication frame.

In this embodiment of this application, a communication method is provided. A first access point (an AP 1) generates the third communication frame, and sends the third communication frame to a first non-access point station (a non-AP STA 1) associated with the AP 1. The AP 1 herein may alternatively be a processor/chip that can be configured to execute computer-executable instructions. This is not limited in this embodiment of this application.

The third communication frame in this embodiment of this application includes the third information and the fifth information. The third information indicates the third time information corresponding to the second AP (an AP 2), and the third time information may be specifically a TU boundary that is of the AP 2 and that is indicated based on the TSF timer of the AP 2. The TU boundary herein refers to an 11^{th} bit to a 26^{th} bit in the TSF timer. The third time information corresponds to the start time of the restricted target wake time service period RTWT SP of the AP 2. The fifth information indicates the identifier of the AP 2, there is the mapping relationship between the identifier of the AP 2 and the TSF timer of the AP 2, and the AP 2 and the AP 1 are different APs. It may be understood that a part or all of bits of the TSF timer of the AP 2 that are mapped to the identifier of the AP 2 may be found by using the identifier of the AP 2 as an index.

In a current multi-AP communication scenario, because TSF timers of different APs are independently selected, TU boundaries of the different APs may not be aligned. As a result, the non-AP STA 1 associated with the AP 1 cannot correctly obtain the start time of the RTWT SP of the AP 2 during communication with the AP 1, and cannot terminate a TXOP before the RTWT SP of the AP 2 arrives. Consequently, the AP 2 cannot successfully obtain a channel through contention when the RTWT SP starts, and low-latency service communication of the AP 2 cannot be ensured.

However, in this embodiment of this application, the TSF timer of the AP 2 may be indirectly obtained based on an indication of the fifth information, and then the start time of the RTWT SP of the AP 2 may be determined based on the third information (the third time information, that is, the TU boundary of the AP 2) and the fifth information (the TSF timer of the AP 2) in the third communication frame, and the non-AP STA 1 associated with the AP 1 may terminate the TXOP before the RTWT SP of the AP 2 arrives, so that the AP 2 successfully obtains a channel through contention when the RTWT SP starts, ensuring low-latency service communication of the AP 2.

According to a sixth aspect, an embodiment of this application provides a communication method. The method may be performed by a communication apparatus. The communication apparatus may be a device, or may be a chip (system) or a circuit used for the device. This is not limited in this application. The method includes:
receiving a third communication frame, where the third communication frame includes third information and fifth information, the third information indicates third time information corresponding to a second access point AP, the fifth information indicates an identifier of the second AP, there is a mapping relationship between the identifier of the second AP and a time synchronization function timer TSF timer of the second AP, and the third time information corresponds to start time of a restricted target wake time service period RTWT SP of the second AP; and
parsing the third communication frame.

In this embodiment of this application, a communication method is provided. A first non-access point station (a non-AP STA 1) associated with a first access point (an AP 1) receives the third communication frame from the AP 1, and parses the third communication frame. The non-AP STA 1 herein may alternatively be a processor/chip that can be configured to execute computer-executable instructions. This is not limited in this embodiment of this application.

The third communication frame in this embodiment of this application includes the third information and the fifth information. The third information indicates the third time information corresponding to the second AP (an AP 2), and the third time information may be specifically a TU boundary that is of the AP 2 and that is indicated based on the TSF timer of the AP 2. The TU boundary herein refers to an 11^{th} bit to a 26^{th} bit in the TSF timer. The third time information corresponds to the start time of the restricted target wake time service period RTWT SP of the AP 2. The fifth information indicates the identifier of the AP 2, there is the mapping relationship between the identifier of the AP 2 and the TSF timer of the AP 2, and the AP 2 and the AP 1 are different APs. It may be understood that a part or all of bits of the TSF timer of the AP 2 that are mapped to the identifier of the AP 2 may be found by using the identifier of the AP 2 as an index.

In a current multi-AP communication scenario, because TSF timers of different APs are independently selected, TU boundaries of the different APs may not be aligned. As a result, the non-AP STA 1 associated with the AP 1 cannot correctly obtain the start time of the RTWT SP of the AP 2 during communication with the AP 1, and cannot terminate a TXOP before the RTWT SP of the AP 2 arrives. Consequently, the AP 2 cannot successfully obtain a channel through contention when the RTWT SP starts, and low-latency service communication of the AP 2 cannot be ensured.

However, in this embodiment of this application, the TSF timer of the AP 2 may be indirectly obtained based on an indication of the fifth information, and then the start time of the RTWT SP of the AP 2 may be determined based on the third information (the third time information, that is, the TU boundary of the AP 2) and the fifth information (the TSF timer of the AP 2) in the third communication frame, and the non-AP STA 1 associated with the AP 1 may terminate the TXOP before the RTWT SP of the AP 2 arrives, so that the AP 2 successfully obtains a channel through contention when the RTWT SP starts, ensuring low-latency service communication of the AP 2.

With reference to the fifth aspect or the sixth aspect, in a possible implementation, the third communication frame includes a target wake time TWT element, and the target wake time TWT element includes the fifth information.

In this implementation of this application, a possible specific implementation of carrying the fifth information is provided. Specifically, the fifth information may be carried in the target wake time (target wake time, TWT) element in the third communication frame, and a field in the TWT element is reused to carry the fifth information, so that the TSF timer of the second AP can be indirectly obtained by indicating the identifier of the second AP, and signaling overheads can be reduced to some extent.

With reference to the fifth aspect or the sixth aspect, in a possible implementation, the TWT element in the third communication frame includes a broadcast TWT parameter set, and the fifth information is carried in any one or more of the following locations in the broadcast TWT parameter set:
a 5^{th} byte in the broadcast TWT parameter set and a 4^{th} bit to an 8^{th} bit in a broadcast TWT information field in the broadcast TWT parameter set.

In this implementation of this application, a possible specific implementation of carrying the fifth information is provided. Specifically, the fifth information may be carried in one or more locations in the broadcast TWT parameter set in the TWT element. For example, when there are sufficient idle fields in the broadcast TWT parameter set, the fifth information may be carried in a 5^{th} byte in the broadcast TWT parameter set, or a 4^{th} bit to an 8^{th} bit in the broadcast TWT information field in the broadcast TWT parameter set.

With reference to the fifth aspect or the sixth aspect, in a possible implementation, information about the mapping relationship is carried in a field other than the TWT element in the third communication frame, or information about the mapping relationship is carried in a communication frame different from the third communication frame.

In this implementation of this application, a possible specific implementation of carrying the information about the mapping relationship is provided. Specifically, the information about the mapping relationship between the identifier of the second AP and the TSF timer of the second AP may be carried in a field other than the TWT element in the third communication frame, or may be carried in a communication frame different from the third communication frame, and carried in a newly defined information element. According to this embodiment of this application, the identifier of the second AP is used as an index, and a part or all of the bits of the TSF timer that is of the second AP and that is mapped to the identifier of the second AP may be found based on the mapping relationship between the identifier of the second AP and the TSF timer of the second AP.

With reference to the fifth aspect or the sixth aspect, in a possible implementation, the TWT element in the third communication frame includes third indication information, and the third indication information indicates that TWT information of the second AP exists in the TWT element.

In this implementation of this application, a possible specific implementation of the third indication information is provided. Specifically, the third indication information may be carried in the TWT element in the third communication frame, to indicate that the TWT element carries the TWT information of the second AP. It may be understood that, because the TWT element may carry a plurality of broadcast TWT parameter sets, the third indication information may indicate that the TWT element carries only the TWT information of the second AP; or the third indication information may alternatively indicate that some broadcast TWT parameter sets carry the TWT information of the second AP, and some other broadcast TWT parameter sets carry TWT information of the first AP.

With reference to the fifth aspect or the sixth aspect, in a possible implementation, the third indication information is carried in one or more of the following locations in the TWT element:
an 8^{th} bit in a control field in the TWT element and a 16^{th} bit in a request type field in the broadcast TWT parameter set in the TWT element.

In this implementation of this application, a possible specific implementation of carrying the third indication information is provided. Specifically, the third indication information may be carried in one or more locations in the TWT element. For example, when the third indication information may be carried in an 8^{th} bit in the control field in the TWT element, the third indication information indicates that the TWT element carries only the TWT information of the second AP; or when the first indication information may be carried in a 16^{th} bit in the request type field in the broadcast TWT parameter set in the TWT element, the third indication information indicates that the broadcast TWT parameter set carries the TWT information of the second AP, and optionally, another broadcast TWT parameter set may carry the TWT information of the first AP, or may carry the TWT information of the second AP.

With reference to the fifth aspect or the sixth aspect, in a possible implementation, the third communication frame is a beacon frame; or
the third communication frame is a communication frame in response to a probe request frame, and the probe request frame is from a first non-access point station non-AP STA.

In this implementation of this application, a possible specific implementation of the third communication frame is provided. Specifically, the third communication frame may be a beacon frame, or may be a probe response frame. When the third communication frame is the probe response frame, before generating the third communication frame, the first AP further receives the probe request frame sent by the first non-AP STA.

According to a seventh aspect, an embodiment of this application provides a communication method. The method may be performed by a communication apparatus. The communication apparatus may be a device, or may be a chip (system) or a circuit used for the device. This is not limited in this application. The method includes:
generating a fourth communication frame, where the fourth communication frame includes sixth information, the sixth information indicates 16 consecutive bits of a time synchronization function timer TSF timer of a first access point AP, a least significant bit in the 16 consecutive bits is any one of 10 least significant bits in the TSF timer of the first AP, and the TSF timer of the first AP corresponds to start time of a restricted target wake time service period RTWT SP of a second AP; and
sending the fourth communication frame.

In this embodiment of this application, a communication method is provided. The first access point (an AP 1) generates the fourth communication frame, and sends the fourth communication frame to a first non-access point station (a non-AP STA 1) associated with the AP 1. The AP 1 herein may alternatively be a processor/chip that can be configured to execute computer-executable instructions. This is not limited in this embodiment of this application.

The fourth communication frame in this embodiment of this application includes the sixth information. The sixth information indicates 16 consecutive bits of the TSF timer of the AP 1, a least significant bit in the 16 consecutive bits is any one of 10 least significant bits in the TSF timer of the AP 1, the TSF timer of the AP 1 corresponds to the start time of the restricted target wake time service period RTWT SP of the AP 2, and the AP 2 and the AP 1 are different APs. It may be understood that the 16 consecutive bits indicated by the sixth information correspond to different locations in the TSF timer of the AP 1, and time precision indicated by the sixth information may be also different.

In a current multi-AP communication scenario, because TSF timers of different APs are independently selected, TU boundaries of the different APs may not be aligned. As a result, the non-AP STA 1 associated with the AP 1 cannot correctly obtain the start time of the RTWT SP of the AP 2 during communication with the AP 1, and cannot terminate a TXOP before the RTWT SP of the AP 2 arrives. Consequently, the AP 2 cannot successfully obtain a channel through contention when the RTWT SP starts, and low-latency service communication of the AP 2 cannot be ensured.

However, in this embodiment of this application, time precision indicated by the TSF timer of the AP 1 may be changed by changing a location that is in the TSF timer of the AP 1 and that corresponds to the 16 consecutive bits indicated by the sixth information, so that time indicated by the TSF timer of the AP 1 can be infinitely close to the start time of the RTWT SP of the AP 2, to determine the start time of the RTWT SP of the AP 2, and the non-AP STA 1 associated with the AP 1 can terminate the TXOP before the RTWT SP of the AP 2 arrives. In this way, the AP 2 successfully obtains a channel through contention when the RTWT SP starts, ensuring low-latency service communication of the AP 2.

According to an eighth aspect, an embodiment of this application provides a communication method. The method may be performed by a communication apparatus. The communication apparatus may be a device, or may be a chip (system) or a circuit used for the device. This is not limited in this application. The method includes:
receiving a fourth communication frame, where the fourth communication frame includes sixth information, the sixth information indicates 16 consecutive bits of a time synchronization function timer TSF timer of a first access point AP, a least significant bit in the 16 consecutive bits is any one of 10 least significant bits in the TSF timer of the first AP, and the TSF timer of the first AP corresponds to start time of a restricted target wake time service period RTWT SP of a second AP; and
parsing the fourth communication frame.

In this embodiment of this application, a communication method is provided. A first non-access point station (a non-AP STA 1) associated with the first access point (an AP 1) receives the fourth communication frame from the AP 1, and parses the fourth communication frame. The non-AP STA 1 herein may alternatively be a processor/chip that can be configured to execute computer-executable instructions. This is not limited in this embodiment of this application.

The fourth communication frame in this embodiment of this application includes the sixth information. The sixth information indicates 16 consecutive bits of the TSF timer of the AP 1, a least significant bit in the 16 consecutive bits is any one of 10 least significant bits in the TSF timer of the AP 1, the TSF timer of the AP 1 corresponds to the start time of the restricted target wake time service period RTWT SP of the AP 2, and the AP 2 and the AP 1 are different APs. It may be understood that the 16 consecutive bits indicated by the sixth information correspond to different locations in the TSF timer of the AP 1, and time precision indicated by the sixth information may be also different.

In a current multi-AP communication scenario, because TSF timers of different APs are independently selected, TU boundaries of the different APs may not be aligned. As a result, the non-AP STA 1 associated with the AP 1 cannot correctly obtain the start time of the RTWT SP of the AP 2 during communication with the AP 1, and cannot terminate a TXOP before the RTWT SP of the AP 2 arrives. Consequently, the AP 2 cannot successfully obtain a channel through contention when the RTWT SP starts, and low-latency service communication of the AP 2 cannot be ensured.

However, in this embodiment of this application, time precision indicated by the TSF timer of the AP 1 may be changed by changing a location that is in the TSF timer of the AP 1 and that corresponds to the 16 consecutive bits indicated by the sixth information, so that time indicated by the TSF timer of the AP 1 can be infinitely close to the start time of the RTWT SP of the AP 2, to determine the start time of the RTWT SP of the AP 2, and the non-AP STA 1 associated with the AP 1 can terminate the TXOP before the RTWT SP of the AP 2 arrives. In this way, the AP 2 successfully obtains a channel through contention when the RTWT SP starts, ensuring low-latency service communication of the AP 2.

With reference to the seventh aspect or the eighth aspect, in a possible implementation, the fourth communication frame includes a target wake time TWT element, the target wake time TWT element includes the sixth information, and a broadcast TWT parameter set in the TWT element carries RTWT information of the second AP.

In this implementation of this application, a possible specific implementation of carrying the sixth information is provided. Specifically, the sixth information may be carried in the target wake time (target wake time, TWT) element in the fourth communication frame. Correspondingly, the broadcast TWT parameter set in the TWT element carries the RTWT information of the second AP, and a field in the TWT element is reused to carry the sixth information, so that the 16 consecutive bits of the TSF timer of the AP 1 can be indicated, and signaling overheads can be reduced to some extent.

With reference to the seventh aspect or the eighth aspect, in a possible implementation, the fourth communication frame further includes seventh information, and the seventh information indicates a correspondence between the least significant bit in the 16 consecutive bits and a bit in the TSF timer of the first AP.

In this implementation of this application, a possible specific implementation of the seventh information is provided. Specifically, the fourth communication frame may further include the seventh information, and different values of the seventh information may indicate a bit that is in the TSF timer of the first AP and that corresponds to the least significant bit in the 16 consecutive bits. According to this embodiment of this application, a trade-off may be performed, based on the correspondence between the least significant bit in the 16 consecutive bits indicated by the seventh information and the bit in the TSF timer of the first AP, between time precision and time ranges indicated by the seventh information, to obtain more precise start time of the RTWT SP of the AP 2.

With reference to the seventh aspect or the eighth aspect, in a possible implementation, the fourth communication frame further includes eighth information, and the eighth information indicates that time indicated by the 16 consecutive bits is indicated based on the TSF timer of the first AP, or is indicated based on a TSF timer of the second AP.

In this implementation of this application, a possible specific implementation of the eighth information is provided. Specifically, the fourth communication frame may further include the eighth information, and the eighth information indicates whether time indicated by a TWT field is indicated based on the TSF timer of the first AP or the TSF timer of the second AP. In this way, time indicated in different cases can be considered, and more precise start time of the RTWT SP of the AP 2 can be obtained.

With reference to the seventh aspect or the eighth aspect, in a possible implementation, the fourth communication frame is a beacon frame; or
the fourth communication frame is a communication frame in response to a probe request frame, and the probe request frame is from a first non-access point station non-AP STA.

In this implementation of this application, a possible specific implementation of the fourth communication frame is provided. Specifically, the fourth communication frame may be a beacon frame, or may be a probe response frame. When the fourth communication frame is the probe response frame, before generating the fourth communication frame, the first AP further receives the probe request frame sent by the first non-AP STA.

According to a ninth aspect, an embodiment of this application provides a communication apparatus. The apparatus includes modules or units configured to perform the method according to any one of the first aspect or the possible implementations of the first aspect.

In a possible design, the apparatus includes:
a processing unit, configured to generate a first communication frame, where the first communication frame includes first information and second information, the first information indicates first time information corresponding to a first access point AP, the second information indicates an offset between the first time information and second time information, and the second time information is start time of a restricted target wake time service period RTWT SP of a second AP; and
a communication unit, configured to send the first communication frame.

For a method performed by the processing unit and the communication unit, refer to the method corresponding to the first aspect. Details are not described herein again.

For technical effect brought by the ninth aspect and any possible implementation of the ninth aspect, refer to the descriptions of the technical effect corresponding to the first aspect and the corresponding implementations of the first aspect.

According to a tenth aspect, an embodiment of this application provides a communication apparatus. The apparatus includes modules or units configured to perform the method according to any one of the second aspect or the possible implementations of the second aspect.

In a possible design, the apparatus includes:
a communication unit, configured to receive a first communication frame, where the first communication frame includes first information and second information, the first information indicates first time information corresponding to a first access point AP, the second information indicates an offset between the first time information and second time information, and the second time information is start time of a restricted target wake time service period RTWT SP of a second AP; and
a processing unit, configured to parse the first communication frame.

For a method performed by the processing unit and the communication unit, refer to the method corresponding to the second aspect. Details are not described herein again.

For technical effect brought by the tenth aspect and any possible implementation of the tenth aspect, refer to the descriptions of the technical effect corresponding to the second aspect and the corresponding implementations of the second aspect.

According to an eleventh aspect, an embodiment of this application provides a communication apparatus. The apparatus includes modules or units configured to perform the method according to any one of the third aspect or the possible implementations of the third aspect.

In a possible design, the apparatus includes:
a processing unit, configured to generate a second communication frame, where the second communication frame includes third information and fourth information, the third information indicates third time information corresponding to a second access point AP, the fourth information indicates a part or all of bits of a time synchronization function timer TSF timer of the second AP, or indicates an offset between a TSF timer of the second AP and a TSF timer of a first AP, and the third time information corresponds to start time of a restricted target wake time service period RTWT SP of the second AP; and
a communication unit, configured to send the second communication frame.

For a method performed by the processing unit and the communication unit, refer to the method corresponding to the third aspect. Details are not described herein again.

For technical effect brought by the eleventh aspect and any possible implementation of the eleventh aspect, refer to the descriptions of the technical effect corresponding to the third aspect and the corresponding implementations of the third aspect.

According to a twelfth aspect, an embodiment of this application provides a communication apparatus. The apparatus includes modules or units configured to perform the method according to any one of the fourth aspect or the possible implementations of the fourth aspect.

In a possible design, the apparatus includes:
a communication unit, configured to receive a second communication frame, where the second communication frame includes third information and fourth information, the third information indicates third time information corresponding to a second access point AP, the fourth information indicates a part or all of bits of a time synchronization function timer TSF timer of the second AP, or indicates an offset between a TSF timer of the second AP and a TSF timer of a first AP, and the third time information corresponds to start time of a restricted target wake time service period RTWT SP of the second AP; and
a processing unit, configured to parse the second communication frame.

For a method performed by the processing unit and the communication unit, refer to the method corresponding to the fourth aspect. Details are not described herein again.

For technical effect brought by the twelfth aspect and any possible implementation of the twelfth aspect, refer to the descriptions of the technical effect corresponding to the fourth aspect and the corresponding implementations of the fourth aspect.

According to a thirteenth aspect, an embodiment of this application provides a communication apparatus. The apparatus includes modules or units configured to perform the method according to any one of the fifth aspect or the possible implementations of the fifth aspect.

In a possible design, the apparatus includes:
a processing unit, configured to generate a third communication frame, where the third communication frame includes third information and fifth information, the third information indicates third time information corresponding to a second access point AP, the fifth information indicates an identifier of the second AP, there is a mapping relationship between the identifier of the second AP and a time synchronization function timer TSF timer of the second AP, and the third time information corresponds to start time of a restricted target wake time service period RTWT SP of the second AP; and
a communication unit, configured to send the third communication frame.

For a method performed by the processing unit and the communication unit, refer to the method corresponding to the fifth aspect. Details are not described herein again.

For technical effect brought by the thirteenth aspect and any possible implementation of the thirteenth aspect, refer to the descriptions of the technical effect corresponding to the fifth aspect and the corresponding implementations of the fifth aspect.

According to a fourteenth aspect, an embodiment of this application provides a communication apparatus. The apparatus includes modules or units configured to perform the method according to any one of the sixth aspect or the possible implementations of the sixth aspect.

In a possible design, the apparatus includes:
a communication unit, configured to receive a third communication frame, where the third communication frame includes third information and fifth information, the third information indicates third time information corresponding to a second access point AP, the fifth information indicates an identifier of the second AP, there is a mapping relationship between the identifier of the second AP and a time synchronization function TSF timer of the second AP, and the third time information corresponds to start time of a restricted target wake time service period RTWT SP of the second AP; and
a processing unit, configured to parse the third communication frame.

For a method performed by the processing unit and the communication unit, refer to the method corresponding to the sixth aspect. Details are not described herein again.

For technical effect brought by the fourteenth aspect and any possible implementation of the fourteenth aspect, refer to the descriptions of the technical effect corresponding to the sixth aspect and the corresponding implementations of the sixth aspect.

According to a fifteenth aspect, an embodiment of this application provides a communication apparatus. The apparatus includes modules or units configured to perform the method according to any one of the seventh aspect or the possible implementations of the seventh aspect.

In a possible design, the apparatus includes:
a processing unit, configured to generate a fourth communication frame, where the fourth communication frame includes sixth information, the sixth information indicates 16 consecutive bits of a time synchronization function timer TSF timer of a first access point AP, a least significant bit in the 16 consecutive bits is any one of 10 least significant bits in the TSF timer of the first AP, and the TSF timer of the first AP corresponds to start time of a restricted target wake time service period RTWT SP of a second AP; and
a communication unit, configured to send the fourth communication frame.

For a method performed by the processing unit and the communication unit, refer to the method corresponding to the seventh aspect. Details are not described herein again.

For technical effect brought by the fifteenth aspect and any possible implementation of the fifteenth aspect, refer to the descriptions of the technical effect corresponding to the seventh aspect and the corresponding implementations of the seventh aspect.

According to a sixteenth aspect, an embodiment of this application provides a communication apparatus. The apparatus includes modules or units configured to perform the method according to any one of the eighth aspect or the possible implementations of the eighth aspect.

In a possible design, the apparatus includes:
a communication unit, configured to receive a fourth communication frame, where the fourth communication frame includes sixth information, the sixth information indicates 16 consecutive bits of a time synchronization function timer TSF timer of a first access point AP, a least significant bit in the 16 consecutive bits is any one of 10 least significant bits in the TSF timer of the first AP, and the TSF timer of the first AP corresponds to start time of a restricted target wake time service period RTWT SP of a second AP; and
a processing unit, configured to parse the fourth communication frame.

For a method performed by the processing unit and the communication unit, refer to the method corresponding to the eighth aspect. Details are not described herein again.

For technical effect brought by the sixteenth aspect and any possible implementation of the sixteenth aspect, refer to the descriptions of the technical effect corresponding to the eighth aspect and the corresponding implementations of the eighth aspect.

Optionally, in the communication apparatus according to any one of the ninth aspect to the sixteenth aspect and the possible implementations of the ninth aspect to the sixteenth aspect:

In an implementation, the communication apparatus is a communication device. When the communication apparatus is the communication device, the communication unit may be a transceiver or an input/output interface, and the processing unit may be at least one processor. Optionally, the transceiver may be a transceiver circuit. Optionally, the input/output interface may be an input/output circuit.

In another implementation, the communication apparatus is a chip (system) or a circuit used for a communication device. When the communication apparatus is the chip (system) or the circuit used in the communication device, the communication unit may be a communication interface (input/output interface), an interface circuit, an output circuit, an input circuit, a pin, a related circuit, or the like on the chip (system) or the circuit, and the processing unit may be at least one processor, a processing circuit, a logic circuit, or the like.

According to a seventeenth aspect, an embodiment of this application provides a communication apparatus. The communication apparatus includes a processor. The processor is coupled to a memory, and may be configured to execute instructions in the memory, to implement the method according to any one of the first aspect to the eighth aspect and the possible implementations of the first aspect to the eighth aspect. Optionally, the communication apparatus further includes the memory. Optionally, the communication apparatus further includes a communication interface, and the processor is coupled to the communication interface.

According to an eighteenth aspect, an embodiment of this application provides a communication apparatus. The apparatus includes a logic circuit and a communication interface. The communication interface is configured to receive information or send information. The logic circuit is configured to receive information or send information through the communication interface, to enable the communication apparatus to perform the method according to any one of the first aspect to the eighth aspect and the possible implementations of the first aspect to the eighth aspect.

According to a nineteenth aspect, an embodiment of this application provides a computer-readable storage medium. The computer-readable storage medium is configured to store a computer program (which may also be referred to as code or instructions). When the computer program is run on a computer, the method according to any one of the first aspect to the eighth aspect and the possible implementations of the first aspect to the eighth aspect is implemented.

According to a twentieth aspect, an embodiment of this application provides a computer program product. The computer program product includes a computer program (which may also be referred to as code or instructions). When the computer program is run, a computer is enabled to perform the method according to any one of the first aspect to the eighth aspect and the possible implementations of the first aspect to the eighth aspect.

According to a twenty-first aspect, an embodiment of this application provides a chip. The chip includes a processor. The processor is configured to execute instructions. When the processor executes the instructions, the chip is enabled to perform the method according to any one of the first aspect to the eighth aspect and the possible implementations of the first aspect to the eighth aspect. Optionally, the chip further includes a communication interface, and the communication interface is configured to receive a signal or send a signal.

According to a twenty-second aspect, an embodiment of this application provides a communication system. The communication system includes at least one of the communication apparatus according to the ninth aspect, the communication apparatus according to the tenth aspect, the communication apparatus according to the eleventh aspect, the communication apparatus according to the twelfth aspect, the communication apparatus according to the thirteenth aspect, the communication apparatus according to the fourteenth aspect, the communication apparatus according to the fifteenth aspect, the communication apparatus according to the sixteenth aspect, the communication apparatus according to the seventeenth aspect, the communication apparatus according to the eighteenth aspect, or the chip according to the twenty-first aspect.

According to a twenty-third aspect, an embodiment of this application provides a communication system. The communication system includes a first communication apparatus and a second communication apparatus. The first communication apparatus is configured to perform the method according to any one of the first aspect, the third aspect, the fifth aspect, or the seventh aspect and the possible implementations of the first aspect, the third aspect, the fifth aspect, or the seventh aspect, and the second communication apparatus is configured to perform the method according to any one of the second aspect, the fourth aspect, the sixth aspect, or the eighth aspect and the possible implementations of the second aspect, the fourth aspect, the sixth aspect, or the eighth aspect.

In addition, in a process of performing the method according to any one of the first aspect to the eighth aspect and the possible implementations of the first aspect to the eighth aspect, a process related to sending information and/or receiving information or the like in the method can be understood as a process of outputting information by a processor and/or a process of receiving input information by the processor. When outputting the information, the processor may output the information to a transceiver (or a communication interface or a sending module), so that the transceiver transmits the information. After the information is output by the processor, other processing may further need to be performed on the information before the information arrives at the transceiver. Similarly, when the processor receives the input information, the transceiver (or the communication interface or the sending module) receives the information, and inputs the information into the processor. Further, after the transceiver receives the information, other processing may need to be performed on the information before the information is input into the processor.

Based on the foregoing principle, for example, sending information in the foregoing method may be understood as outputting information by the processor. For another example, receiving information may be understood as receiving input information by the processor.

Optionally, operations such as transmitting, sending, and receiving related to the processor may be more generally understood as operations such as output, receiving, and input of the processor, unless otherwise specified, or provided that the operations do not contradict actual functions or internal logic of the operations in related descriptions.

Optionally, in a process of performing the method according to any one of the first aspect to the eighth aspect and the possible implementations of the first aspect to the eighth aspect, the processor may be a processor specially configured to perform the method, or may be a processor that performs the method by executing computer instructions in a memory, for example, a general-purpose processor. The memory may be a non-transitory (non-transitory) memory, for example, a read-only memory (Read-Only Memory, ROM). The memory and the processor may be integrated on a same chip, or may be disposed on different chips. A type of the memory and a manner in which the memory and the processor are disposed are not limited in embodiments of this application.

In a possible implementation, the at least one memory is located outside an apparatus.

In another possible implementation, the at least one memory is located in an apparatus.

In still another possible implementation, some memories in the at least one memory are located in an apparatus, and the other memories are located outside the apparatus.

In this application, the processor and the memory may be alternatively integrated into one device. In other words, the processor and the memory may be alternatively integrated together.

In this embodiment of this application, the start time of the RTWT SP of the AP 2 can be determined, and the non-AP STA 1 associated with the AP 1 can terminate the TXOP before the RTWT SP of the AP 2 arrives, so that the AP 2 successfully obtains a channel through contention when the RTWT SP starts, ensuring low-latency service communication of the AP 2.

### BRIEF DESCRIPTION OF DRAWINGS

To describe the technical solutions in embodiments of this application more clearly, the following briefly describes the accompanying drawings used in embodiments of this application. It is clear that, the accompanying drawings described below show merely some embodiments of this application, and a person of ordinary skill in the art may still derive other drawings from these accompanying drawings without creative efforts.
FIG. 1a is a diagram of an architecture of a communication system according to an embodiment of this application;
FIG. 1b is a diagram of an architecture of a communication system according to an embodiment of this application;
FIG. 2a is a diagram of communication between a multi-link device and another device according to an embodiment of this application;
FIG. 2b is a diagram of communication between a multi-link device and another device according to an embodiment of this application;
FIG. 3 is a diagram of a TU boundary according to an embodiment of this application;
FIG. 4 is a schematic flowchart of a communication method according to an embodiment of this application;
FIG. 5 is a diagram of a frame structure according to an embodiment of this application;
FIG. 6 is a schematic flowchart of a communication method according to an embodiment of this application;
FIG. 7 is a schematic flowchart of a communication method according to an embodiment of this application;
FIG. 8 is a diagram of a frame structure according to an embodiment of this application;
FIG. 9 is a schematic flowchart of a communication method according to an embodiment of this application;
FIG. 10 is a diagram of a structure of a communication apparatus according to an embodiment of this application;
FIG. 11 is a diagram of a structure of a communication apparatus according to an embodiment of this application; and
FIG. 12 is a diagram of a structure of a chip according to an embodiment of this application.

### DESCRIPTION OF EMBODIMENTS

To make objectives, technical solutions, and advantages of this application clearer, the following describes embodiments of this application with reference to accompanying drawings in embodiments of this application.

The terms "first", "second", and the like in the specification, claims, and accompanying drawings of this application are used to distinguish between different objects, but are not used to describe a specific sequence. In addition, terms such as "include" and "have" and any other variants thereof are intended to cover a non-exclusive inclusion. For example, processes, methods, systems, products, or devices that include a series of steps or units are not limited to listed steps or units, but instead, optionally further include steps or units that are not listed, or optionally further include other steps or units inherent to these processes, methods, products, or devices.

"Embodiments" mentioned herein mean that specific features, structures, or characteristics described in combination with embodiments may be included in at least one embodiment of this application. The phrase shown in various locations in the specification may not necessarily refer to a same embodiment, and is not an independent or optional embodiment exclusive from another embodiment. It may be explicitly and implicitly understood by a person skilled in the art that, in embodiments of this application, unless otherwise specified or a logical conflict occurs, terms and/or descriptions in embodiments are consistent and may be mutually referenced, and technical features in different embodiments may be combined based on an internal logical relationship thereof to form a new embodiment.

It should be understood that, in this application, "at least one (item)" means one or more, "a plurality of" means two or more, "at least two (items)" means two, three, or more, and "and/or" is used to describe an association relationship between associated objects and indicates that there may be three relationships. For example, "A and/or B" may indicate the following three cases: Only A exists, only B exists, and both A and B exist, where A and B may be singular or plural. The character "/" generally indicates an "or" relationship between the associated objects. "At least one of the following items (pieces)" or a similar expression thereof means any combination of these items, including any combination of singular items (pieces) or plural items (pieces). For example, at least one item (piece) of a, b, or c may indicate a, b, c, a and b, a and c, b and c, or a, b, and c, where a, b, and c may be singular or plural.

It should be noted that in this application, "indications" may include a direct indication, an indirect indication, an explicit indication, and an implicit indication. When a piece of indication information is described as indicating A, it may be understood as that the indication information carries A, directly indicates A, or indirectly indicates A.

In this application, information indicated by the indication information is referred to as to-be-indicated information. In a specific implementation process, there are manners of indicating the to-be-indicated information. For example, the manners include but are not limited to a manner in which the to-be-indicated information, for example, the to-be-indicated information or an index of the to-be-indicated information, may be directly indicated. Alternatively, the to-be-indicated information may be indirectly indicated by indicating other information, where there is an association relationship between the other information and the to-be-indicated information. Alternatively, only a part of the to-be-indicated information may be indicated, and the other part of the to-be-indicated information is known or pre-agreed upon. For example, specific information may alternatively be indicated by using an arrangement sequence of a plurality of pieces of information that is pre-agreed upon (for example, stipulated in a protocol), to reduce indication overheads to some extent. The to-be-indicated information may be sent as a whole, or may be divided into a plurality of pieces of sub-information for separate sending. In addition, sending periodicities and/or sending occasions of these pieces of sub-information may be the same or may be different. A specific sending method is not limited in this application. The sending periodicities and/or the sending occasions of these pieces of sub-information may be predefined, for example, predefined according to a protocol, or may be configured by a transmit end device by sending configuration information to a receive end device.

It should be noted that in this application, "sending" can be understood as "outputting", and "receiving" can be understood as "inputting". In "sending information to A", "to A" indicates only a direction of information transmission, A is a destination, and "sending information to A" is not necessarily directly performed over an air interface. "Sending information to A" includes directly sending the information to A, or includes indirectly sending the information to A through a transmitter. Therefore, "sending information to A" can also be understood as "outputting information destined for A". Likewise, "receiving information from A" indicates that a source of the information is A, and includes directly receiving the information from A, or includes indirectly receiving the information from A through a receiver. Therefore, "receiving information from A" can also be understood as "inputting information from A".

The technical solutions provided in embodiments of this application may be applied to a WLAN system, for example, Wi-Fi. For example, the method provided in embodiments of this application may be applied to the IEEE 802.11 series protocols such as the 802.11a/b/g protocol, the 802.11n protocol, the 802.11ac protocol, the 802.11ax protocol, the 802.11be protocol, or a next-generation protocol. Examples are not listed one by one herein. The technical solutions provided in embodiments of this application may be further applied to a UWB technology-based wireless personal area network (wireless personal area network, WPAN). For example, the methods provided in embodiments of this application may be applied to IEEE 802.15 series protocols, for example, the 802.15.4a protocol, the 802.15.4z protocol, the 802.15.4ab protocol, or a future generation UWB WPAN protocol. Examples are not listed one by one herein. The technical solutions provided in embodiments of this application may be further applied to the following communication systems, for example, an internet of things (internet of things, IoT) system, a vehicle to everything (vehicle to X, V2X) system, and a narrowband internet of things (narrowband internet of things, NB-IoT) system, may be applied to a device in the internet of vehicles, an internet of things node, a sensor, and the like in the internet of things (internet of things, IoT), a smart camera, a smart remote control, and a smart water/electricity meter in a smart home, a sensor in a smart city, and the like, or may be further applied to a long term evolution (long term evolution, LTE) system, a 5th-generation (5th-generation, 5G) communication system, a new communication system emerging in future communication development, and the like.

The WLAN system can provide high-rate and low-latency transmission. With continuous evolution of WLAN application scenarios, the WLAN system is to be applied to more scenarios or industries, for example, the Internet of Things industry, the Internet of Vehicles industry, the banking industry, enterprise offices, stadiums and exhibition halls, concert halls, hotel rooms, dormitories, hospital wards, classrooms, shopping malls and supermarkets, squares, streets, production workshops, and warehouses. Certainly, a device (for example, an access point or a station) that supports WLAN communication or sensing may be a sensor node (for example, a smart water meter, a smart electricity meter, or a smart air detection node) in a smart city, a smart device (for example, a smart camera, a projector, a display, a television, a speaker, a refrigerator, or a washing machine) in a smart home, a node in the Internet of Things, an entertainment terminal (for example, a wearable device such as augmented reality (augmented reality, AR) or virtual reality (virtual reality, VR)), a smart device (for example, a printer, a projector, a loudspeaker, or a speaker) in a smart office, an Internet of Vehicles device in the Internet of Vehicles, an infrastructure (for example, a vending machine, a self-service navigation console in a shopping mall or supermarket, a self-service cashier, or a self-service ordering machine) in a daily life scenario, a device in a large sports and music venue, or the like.

Embodiments of this application mainly use a WLAN as an example, especially a network applied to the IEEE 802.11 series standards, for example, a system supporting Wi-Fi 7 that may also be referred to as extremely high throughput (extremely high throughput, EHT) or a system supporting Wi-Fi 8 that may also be referred to as ultra high reliability (ultra high reliability, UHR) or ultra high reliability and throughput (ultra high reliability and throughput, UHRT). However, a person skilled in the art easily understands that aspects in embodiments of this application may be extended to other networks using various standards or protocols, for example, Bluetooth (Bluetooth), a high performance radio LAN (high performance radio LAN, HIPERLAN) (a wireless standard similar to the IEEE 802.11 standard, and mainly used in Europe), a wide area network (WAN), or other networks known or developed in the future.

In a possible implementation, the method provided in embodiments of this application may be applied to a scenario of communication or sensing between an access point (access point, AP) and a non-access point station (non-access point station, non-AP STA) in a WLAN, or the like.

For example, the access point is an apparatus having a wireless communication function, supports communication or sensing by using a WLAN protocol, has a function of communicating with or sensing another device (for example, a non-AP STA or another access point) in a WLAN network, and certainly may further have a function of communicating with or sensing another device. Alternatively, the access point is equivalent to a bridge that connects a wired network and a wireless network. A main function of the access point is to connect various wireless network clients together and then connect the wireless network to the Ethernet. In the WLAN system, the access point may be referred to as an access point station (AP STA). The apparatus having a wireless communication function may be an entire device, or may be a chip, a processing system, a functional module, or the like installed in an entire device. The device in which the chip, the processing system, or the functional module is installed may implement a method, a function, and the like in embodiments of this application under control of the chip, the processing system, or the functional module. The AP in embodiments of this application is an apparatus that provides a service for the non-AP STA, and may support the 802.11 series protocols or subsequent protocols, or the like. For example, the access point may be an access point for a terminal (for example, a mobile phone) to access a wired (or wireless) network, and is mainly deployed at home, inside a building, and inside a campus. A typical coverage radius is tens of meters to over one hundred meters. Certainly, the access point may alternatively be deployed outdoors. For another example, the AP may be a communication entity, for example, a communication server, a router, a switch, or a bridge, or the AP may include various forms of macro base stations, micro base stations, relay stations, and the like.

For example, the non-AP STA is an apparatus having a wireless communication function, supports communication or sensing by using a WLAN protocol, and has a capability of communicating with or sensing another non-AP STA or access point in a WLAN network. For example, the non-AP STA is any user communication device that allows a user to communicate with or sense the AP and then communicate with the WLAN. The apparatus having the wireless communication function may be an entire device, or may be a chip, a processing system, a functional module, or the like installed in the entire device. The device in which the chip, the processing system, or the functional module is installed may implement the method and the function in embodiments of this application under control of the chip, the processing system, or the functional module. For example, the non-AP STA may be a wireless communication chip, a wireless sensor, or a wireless communication terminal, and may also be referred to as a user. For another example, the non-AP STA may be a mobile phone supporting a Wi-Fi communication function, a tablet computer supporting a Wi-Fi communication function, a set-top box supporting a Wi-Fi communication function, a smart television supporting a Wi-Fi communication function, an intelligent wearable device supporting a Wi-Fi communication function, a vehicle-mounted communication device supporting a Wi-Fi communication function, or a computer supporting a Wi-Fi communication function.

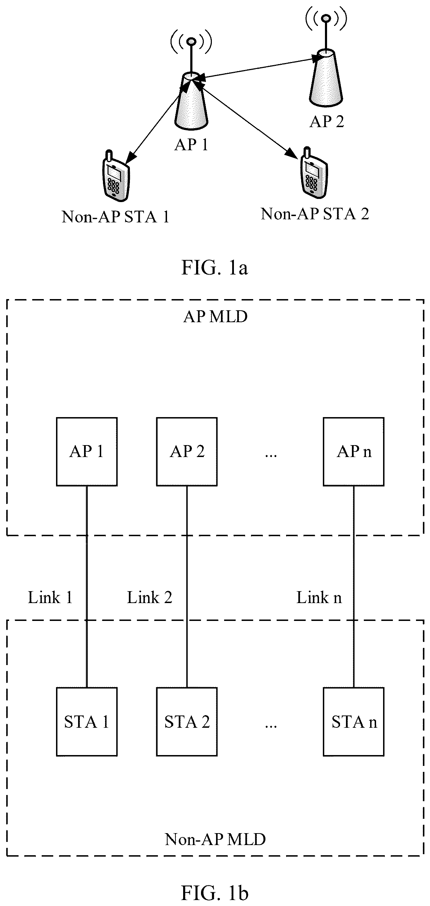

FIG. 1a is a diagram of an architecture of a communication system according to an embodiment of this application.

As shown in FIG. 1a, the communication system may include one or more APs and one or more non-AP STAs. FIG. 1a shows two access points such as an AP 1 and an AP 2, and two non-AP STAs such as a non-AP STA 1 and a non-AP STA 2. It may be understood that one or more APs may communicate with one or more non-AP STAs. Certainly, the APs may also communicate with each other, and the non-AP STAs may also communicate with each other.

It may be understood that, in FIG. 1a, an example in which the non-AP STA is a mobile phone and the AP is a router is used, and this does not mean that types of the AP and the non-AP STA in this embodiment of this application are limited. In addition, FIG. 1a shows only two APs and two non-AP STAs as an example. However, there may be more or fewer APs or non-AP STAs. This is not limited in embodiments of this application.

In another possible implementation, the method provided in this embodiment of this application may be applied to a scenario of communication or sensing between multi-link devices (multi-link device, MLD) in a WLAN, or the like.

The multi-link device is a device that simultaneously includes multiple stations (such as APs or non-AP STAs) respectively operating on different frequency bands or channels. The multi-link device includes a plurality of affiliated stations. The affiliated stations may be physical stations, or may be logical stations. Each station may operate on one link, one frequency band, one channel, or the like. The affiliated station may be an AP or a non-AP STA. For ease of description, in embodiments of this application, a multi-link device whose affiliated station is an AP may be referred to as a multi-link AP, a multi-link AP device, or an AP multi-link device (AP multi-link device, AP MLD). A multi-link device whose affiliated station is a non-AP STA is referred to as a multi-link STA, a multi-link STA device, or a STA multi-link device (STA multi-link device). Alternatively, a multi-link device whose affiliated station is a non-AP STA is referred to as a multi-link non-AP, a multi-link non-AP device, or a non-AP multi-link device (non-AP multi-link device, non-AP MLD). The multi-link device (which may be a non-AP MLD or an AP MLD herein) may be a communication apparatus having a wireless communication function. The communication apparatus may be an entire device, or may be a chip, a processing system, a functional module, or the like installed in an entire device. The device in which the chip, the processing system, or the functional module is installed may implement a method and a function in embodiments of this application under control of the chip, the processing system, or the functional module.

The multi-link device may implement wireless communication according to the 802.11 series protocols, for example, comply with EHT, or comply with and be based on the 802.11be, or be compatible with and support the 802.11 be, to implement communication with another device. Certainly, the another device may be a multi-link device, or may not be a multi-link device. A plurality of links are set up between one multi-link device and another multi-link device, for example, a link 1, a link 2, and a link n shown in FIG. 1b.

FIG. 1b is a diagram of an architecture of a communication system according to an embodiment of this application.

As shown in FIG. 1b, an AP MLD includes an AP 1, an AP 2, ..., and an AP n, and a non-AP MLD includes a STA 1, a STA 2, ..., and a STA n. Herein, n is a positive integer. The AP MLD and the non-AP MLD may perform parallel communication on a link 1, a link 2, ..., and a link n. The STA 1 in the non-AP MLD sets up the link 1 with the AP 1 of the AP MLD, the STA 2 in the non-AP MLD sets up the link 2 with the AP 2 of the AP MLD, the STA n in the non-AP MLD sets up the link n with the AP n of the AP MLD, and the like. Therefore, the non-AP MLD and the AP MLD may communicate with each other after setup of an association relationship. For example, the multi-link device in embodiments of this application may be a single-antenna device, or may be a multi-antenna device. For example, the multi-link device may be a device with more than two antennas. A quantity of antennas included in the multi-link device is not limited in embodiments of this application.

Frequency bands on which the multi-link device operates may include but are not limited to sub-1 GHz, 2.4 GHz, 5 GHz, 6 GHz, and a high-frequency 60 GHz.

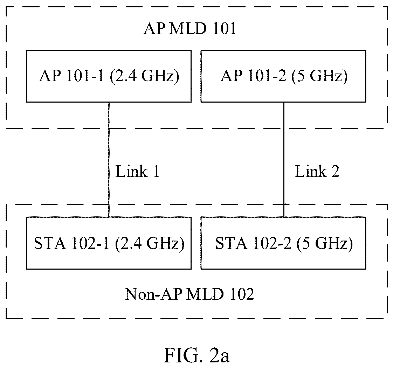

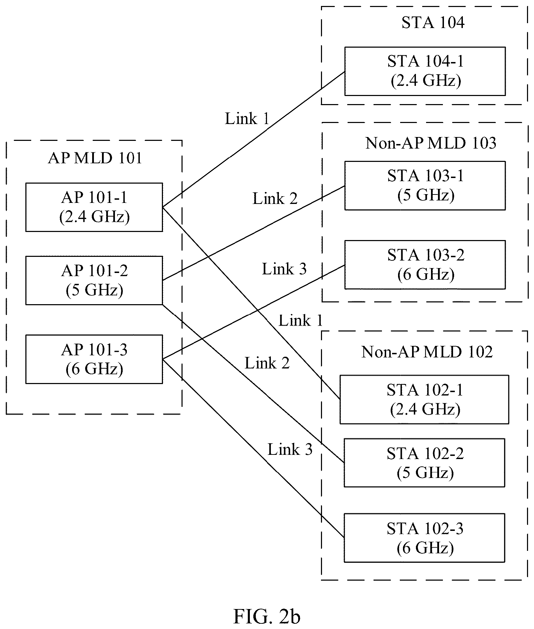

FIG. 2a and FIG. 2b are two diagrams of communication between a multi-link device and another device on a plurality of links in a wireless local area network.

For example, FIG. 2a shows a scenario in which an AP MLD 101 communicates with a non-AP MLD 102. The AP MLD 101 includes an affiliated AP 101-1 and an affiliated AP 101-2. The non-AP MLD 102 includes an affiliated STA 102-1 and an affiliated STA 102-2. The AP MLD 101 and the non-AP MLD 102 perform parallel communication on a link 1 and a link 2.

For example, FIG. 2b shows a scenario in which an AP MLD 101 communicates with a non-AP MLD 102, a non-AP MLD 103, and a STA 104. The AP MLD 101 includes an affiliated AP 101-1 to an affiliated AP 101-3. The non-AP MLD 102 includes three affiliated STAs: a STA 102-1, a STA 102-2, and a STA 102-3. The non-AP MLD 103 includes two affiliated STAs: a STA 103-1 and a STA 103-2. The STA 104 is a single-link device and includes a STA 104-1. The AP MLD 101 may separately communicate with the non-AP MLD 102 on a link 1, a link 2, and a link 3, communicate with the non-AP MLD 103 on a link 2 and a link 3, and communicate with the STA 104 on a link 1. In an example, the STA 104 operates in the 2.4 GHz frequency band; in the non-AP MLD 103, the STA 103-1 operates in the 5 GHz frequency band, and the STA 103-2 operates in the 6 GHz frequency band; and in the non-AP MLD 102, the STA 102-1 operates in the 2.4 GHz frequency band, the STA 102-2 operates in the 5 GHz frequency band, and the STA 102-3 operates in the 6 GHz frequency band. The AP 101-1 operating in the 2.4 GHz frequency band in the AP MLD 101 may communicate, on the link 1, uplink or downlink data with the STA 104 and the STA 102-1 in the non-AP MLD 102. The AP 101-2 operating in the 5 GHz frequency band in the AP MLD 101 may communicate, on the link 2, uplink or downlink data with the STA 103-1 operating in the 5 GHz frequency band in the non-AP MLD 103, and also communicate, on the link 2, uplink or downlink data with the STA 102-2 operating in the 5 GHz frequency band in the non-AP MLD 102. The AP 101-3 operating in the 6 GHz frequency band in the AP MLD 101 may communicate, on the link 3, uplink or downlink data with the STA 102-3 operating in the 6 GHz frequency band in the non-AP MLD 102, and also communicate, on the link 3, uplink or downlink data with the STA 103-2 in the non-AP MLD.

It should be noted that FIG. 2a shows that the AP MLD supports only two frequency bands, and FIG. 2b shows an example in which the AP MLD 101 supports only the three frequency bands (2.4 GHz, 5 GHz, and 6 GHz), each frequency band corresponds to one link, and the AP MLD 101 may operate on one or more links of the link 1, the link 2, or the link 3. In actual application, the AP MLD and the non-AP MLD may further support more or fewer frequency bands, that is, the AP MLD and the non-AP MLD may operate on more links or fewer links. This is not limited in embodiments of this application. FIG. 2a and FIG. 2b are merely simple diagrams, and do not constitute any limitation on the protection scope of embodiments of this application. It may be understood that, for descriptions of an 802.11 physical layer (physical layer, PHY) and a medium access control (medium access control, MAC) layer in the multi-link device, refer to related standards, protocols, or the like. Details are not shown one by one in embodiments of this application.

This application provides a communication method, applied to the field of communication technologies, for example, multi-AP coordinated low-latency communication. To describe the solutions of this application more clearly, the following first describes some knowledge related to multi-AP coordinated low-latency communication with reference to the foregoing descriptions of the AP, the non-AP STA, the AP MLD, and the non-AP MLD.

Target wake time (target wake time, TWT): The TWT is a technology defined in Wi-Fi 6 for power saving. A core idea of the TWT is to set some periodic time periods, so that some devices need to remain in an active state only in these time periods (TWT service period, TWT SP), and may sleep in other time periods, to save power.

The TWT is classified into individual TWT (individual TWT) and broadcast TWT (broadcast TWT). In the individual TWT, each STA may independently set up a TWT agreement with the AP. Therefore, each STA may have its own active time period and sleep time period. In the broadcast TWT, the AP may set up a common TWT agreement for a group of STAs, and a plurality of STAs operate in a same active time period and sleep in other time periods.

Individual TWT: The individual TWT means that a TWT requesting station (TWT Requesting STA, requesting station for short) sends a TWT request message to a TWT responding station (TWT Responding STA, responding station for short), to request to set wake-up time. After receiving the TWT request message, the responding station sends a TWT response message to the requesting station. After interaction succeeds, a TWT agreement is set up between the requesting station and the responding station. After the TWT agreement is reached, both the requesting station and the responding station should remain in an active state in an agreed-upon time period, to send and receive data. Outside the time period, the stations may sleep to save power. Usually, the STA sends a TWT agreement setup request to the AP. To be specific, the STA is a requesting station, and the AP is a responding station. Certainly, the AP may alternatively initiate the TWT agreement setup request to the station. After setup of the TWT agreement, an agreed-upon active time period is referred to as a TWT service period (service period, SP). Each TWT agreement may include a plurality of equal-length TWT SPs that periodically appear.

Broadcast TWT: Different from the individual TWT, the broadcast TWT provides a "batch management" mechanism. An AP may set up a series of TWT SPs that periodically appear with a plurality of STAs. In the service periods, the plurality of STAs need to remain in an active state, to communicate with the AP.

The AP may include information about one or more pieces of broadcast TWT in a beacon (Beacon) frame. Each piece of broadcast TWT is jointly represented by a broadcast TWT identifier and a media access control (media access control, MAC) layer address of the AP. After receiving the beacon frame, if a STA intends to join the broadcast TWT, the STA may send a broadcast TWT setup request message to the AP, to join the broadcast TWT. During setup of the broadcast TWT, the STA needs to specify a broadcast TWT identifier to request to join a specific piece of broadcast TWT. After joining the broadcast TWT, the STA may be woken up based on a service period indicated by a TWT parameter set, to communicate with the AP. It should be noted that, if the STA supports the broadcast TWT but does not explicitly join a broadcast TWT ID, the STA participates in broadcast TWT whose broadcast TWT ID is 0 by default.

Similar to the individual TWT, the broadcast TWT parameter set also specifies an interval at which TWT service periods appear and duration of each TWT service period. In addition, a parameter of the broadcast TWT further includes a life cycle of the broadcast TWT. The life cycle is in a unit of a beacon frame interval, and indicates duration of the setup broadcast TWT.

Low-latency communication: With development of wireless networks and continuous upgrade of WLAN technologies, more and more application traffic is carried by Wi-Fi. Besides, emerging mobile applications impose increasingly high requirements on latency performance of the WLAN. For example, applications such as a wireless video, a voice, a game, and augmented reality (augmented reality, AR)/virtual reality (virtual reality, VR) have very high requirements on a communication latency.

To meet requirements of different types of traffic as much as possible, the WLAN needs to prioritize different services. For example, in a channel contention access process in the WLAN, each device has four different access categories (Access Category), and transmission priority classification is implemented by using different contention parameters. Each access category may include two traffic identifiers (traffic identifier, TID) for corresponding to two different services. However, it is difficult to ensure a low latency and a low latency jitter only by distinguishing between contention parameters.

Because data packets of the services are usually periodically generated, and service time defined by the TWT also periodically appears, it is a feasible idea to use the TWT technology to serve the low-latency service.

Restricted target wake time (restricted target wake time, RTWT): The RTWT is a special type of the broadcast TWT, and an RTWT SP defined in the RTWT is used to serve a low-latency service.

The AP may include a TWT element (TWT IE) in a beacon frame to declare the RTWT SP. A value of a broadcast TWT recommendation (Broadcast TWT Recommendation) field in a request type (Request Type) field in the TWT IE is set to 4, to indicate the RTWT.

After the AP declares the RTWT in the beacon frame, the STA may send a request frame (for example, a TWT setup frame) to the AP, to request to join the RTWT and become a member of the RTWT, to send the low-latency service in the RTWT SP.

To ensure that the AP can obtain a channel through contention in the RTWT SP and perform low-latency service communication with the STA, the following rules are formulated in the standard: (1) If the STA has obtained a channel through contention before the RTWT SP arrives, and obtains a transmission opportunity (transmission opportunity, TXOP), the STA needs to terminate the TXOP before the RTWT SP of the AP arrives. (2) If the STA backs off a backoff timer (backoff timer) to 0 through channel contention before the RTWT SP arrives, the STA needs to determine whether one time of transmission can be completed before the RTWT SP arrives. If the transmission cannot be completed, the transmission cannot be initiated. The foregoing rules are formulated, so that the AP can successfully obtain the channel through contention when the RTWT SP starts, to perform low-latency service communication in the RTWT SP.

Multi-AP coordination: With development of wireless networks and popularization of WLAN technologies, WLAN devices become increasingly dense. Because APs are easy to deploy, increasingly dense APs also cause more inter-cell interference. How to reduce inter-cell interference and improve quality of service for a user through coordination between APs becomes a problem needing to be considered in a next generation Wi-Fi technology.

For the RTWT, an AP 1 may broadcast RTWT information of a neighboring AP (for example, an AP 2), so that a station associated with the AP 1 terminates a TXOP before an RTWT SP of the AP 2 arrives, to ensure low-latency service communication of the AP 2.

In a TWT element, a target wake time field indicates arrival time of a first RTWT SP. A length of the target wake time field is 16 bits, and the target wake time field indicates an 11^{th} bit to a 26^{th} bit of a current system time synchronization function (time synchronization function, TSF), that is, TSF[25:10] (bits 10 to 25 of the TSF). It should be noted that the TSF is essentially a time value with a length of 64 bits and in a unit of microsecond (µs). The AP broadcasts a TSF value in a beacon frame. After receiving the TSF value, a STA updates system time locally maintained by the STA to the TSF value, so that time of all STAs is the same as that of the AP (namely, time synchronization). It should be noted that precision of the time indicated by the target wake time field is 1024 µs, and the time may be referred to as one time unit (time unit, TU). Therefore, the target wake time field can indicate only a boundary of the TU.

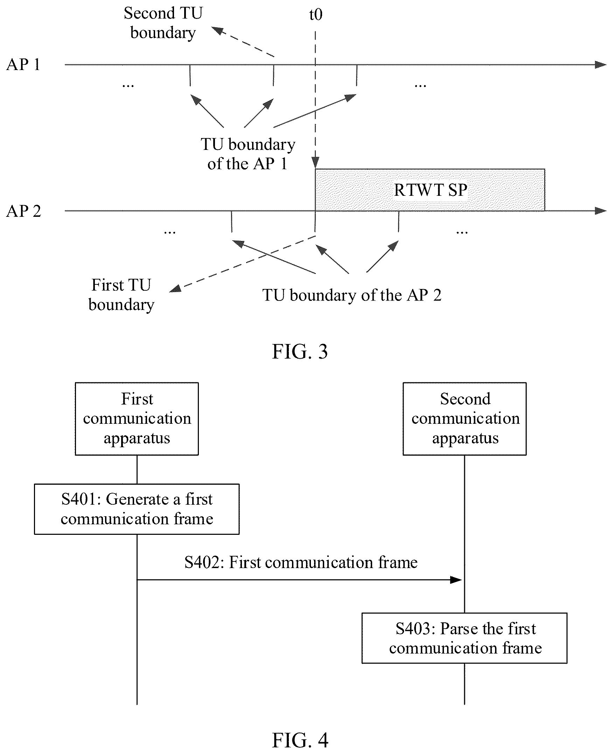

However, because TSFs of different APs are independently selected, their TU boundaries may not be aligned. The following describes, with reference to FIG. 3, a case in which TU boundaries are not aligned in multi-AP coordinated low-latency communication.

It may be understood that the AP in FIG. 3 may be shown as the single-link device in the foregoing description, or may be shown as the AP MLD in the foregoing description. This is not limited in this application.

FIG. 3 is a diagram of a TU boundary according to an embodiment of this application.

As shown in FIG. 3, start time of an RTWT SP of an AP 2 is a moment t0, and the moment t0 is a TU boundary (for example, a first TU boundary in FIG. 3) of the AP 2. Because a TU boundary of an AP 1 is not aligned with the TU boundary of the AP 2, the AP 1 cannot indicate, in a broadcast TWT element of the AP 1, the moment t0 by using a target wake time field, and can indicate only a TU boundary on the left or right of the moment t0 (for example, a second TU boundary in FIG. 3). As a result, a station (a non-AP STA) associated with the AP 1 terminates a TXOP at incorrect time, and it cannot be ensured that the AP 2 performs low-latency service communication in the RTWT SP.

In view of this, embodiments of this application provide a communication method and apparatus, so that the non-AP STA can correctly obtain the start time of the RTWT SP of the AP 2, and terminate the TXOP before the RTWT SP of the AP 2 arrives, and the AP 2 successfully obtains a channel through contention when the RTWT SP starts, ensuring low-latency service communication of the AP 2.

FIG. 4 is a schematic flowchart of a communication method according to an embodiment of this application. The communication method is applied to the field of communication technologies, for example, multi-AP coordinated low-latency communication. The communication method includes but is not limited to the following steps.

S401: A first communication apparatus generates a first communication frame.

S402: The first communication apparatus sends the first communication frame to a second communication apparatus, and correspondingly, the second communication apparatus receives the first communication frame from the first communication apparatus.

S403: The second communication apparatus parses the first communication frame.

It may be understood that the first communication apparatus in this embodiment of this application is a device equipped with a processor/chip that can be configured to execute computer-executable instructions, or may be the processor/chip that can be configured to execute computer-executable instructions. This is not limited in this embodiment of this application. Optionally, the first communication apparatus may be an access device, for example, an access point AP, and may be specifically the AP 1 in FIG. 1a, FIG. 1b, and FIG. 3. The first communication apparatus is configured to perform the communication method in this embodiment of this application, to correctly obtain start time of an RTWT SP of another AP, ensuring low-latency service communication of the another AP.

It may be understood that the second communication apparatus in this embodiment of this application is a device equipped with a processor/chip that can be configured to execute computer-executable instructions, or may be the processor/chip that can be configured to execute computer-executable instructions. This is not limited in this embodiment of this application. Optionally, the second communication apparatus may be a handheld terminal (for example, a mobile phone or a tablet computer), or may be a vehicle-mounted terminal (for example, a wireless terminal in self driving), or may be specifically the non-AP STA 1 in FIG. 1a, or the STA 1 in FIG. 1b, and is configured to participate in performing the communication method in this embodiment of this application, to correctly obtain start time of an RTWT SP of another AP, ensuring low-latency service communication of the another AP.

For ease of description, the first communication apparatus is also referred to as a first AP or an AP 1 below, and the second communication apparatus is referred to as a first non-AP STA or a non-AP STA 1 below. Details are not described below again.

The first communication frame includes first information and second information.

The first information indicates first time information corresponding to the AP 1. The first time information may be specifically a TU boundary that is of the AP 1 and that is indicated based on a TSF timer of the AP 1, for example, the second TU boundary of the AP 1 in FIG. 3. The TU boundary herein refers to an 11^{th} bit to a 26^{th} bit in the TSF timer.

The second information indicates an offset between the first time information and second time information, and the second time information is start time of an RTWT SP of a second access point (an AP 2), specifically, for example, the moment t0 in FIG. 3 (namely, the first TU boundary of the AP 2 in FIG. 3), and the AP 2 and the AP 1 are different APs. The AP 2 herein may be a neighboring AP of the AP 1, for example, the AP 2 in FIG. 1a, FIG. 1b, and FIG. 3.

Further, a specific implementation of "the second communication apparatus parses the first communication frame" in step S403 may be as follows:

The non-AP STA 1 associated with the AP 1 determines the first information and the second information based on the first communication frame, and then determines the start time of the restricted target wake time service period RTWT SP of the AP 2 based on the first information and the second information. For details of the first information and the second information, refer to the descriptions of the first communication frame. Details are not described herein again.

It can be learned with reference to the description in FIG. 3 that, in a current multi-AP (including but not limited to the AP 1 and the AP 2) coordinated low-latency communication scenario, because TSF timers of the AP 1 and the AP 2 are independently selected, TU boundaries of the AP 1 and the AP 2 may not be aligned. As a result, the non-AP STA 1 associated with the AP 1 cannot correctly obtain the start time of the RTWT SP of the AP 2 during communication with the AP 1, and cannot terminate a TXOP before the RTWT SP of the AP 2 arrives. Consequently, the AP 2 cannot successfully obtain a channel through contention when the RTWT SP starts, and low-latency service communication of the AP 2 cannot be ensured.

However, in this embodiment of this application, the start time of the RTWT SP of the AP 2 may be determined based on the first time information indicated by the first information in the first communication frame and the offset between the first time information and the second time information that are indicated by the second information in the first communication frame, and the non-AP STA 1 associated with the AP 1 may terminate the TXOP before the RTWT SP of the AP 2 arrives, so that the AP 2 successfully obtains the channel through contention when the RTWT SP starts, ensuring low-latency service communication of the AP 2.

Further, to enable the second information to indicate the offset between the first time information and the second time information, the following implementations may be included but are not limited thereto.

### Implementation 1:

The second information includes first indication information, and the first indication information may be a part or all of 10 least significant bits of the TSF timer of the first AP corresponding to the start time of the RTWT SP of the second AP.

It may be understood that time precision that may be indicated by the first indication information varies with a quantity of bits included in the first indication information.

For example, the first indication information may include TSF[9:0], TSF[9:1], TSF[9:2], or the like of the first AP, that is, a 1^{st} bit to a 10^{th} bit of the first AP, or a 2^{nd} bit to a 10^{th} bit of the first AP, or a 3^{rd} bit to a 10^{th} bit of the first AP. When the first indication information includes TSF[9:0] of the first AP, time precision that may be indicated by the first indication information may be precise to 1 µs. When the first indication information includes TSF[9:1] of the first AP, time precision that may be indicated by the first indication information may be precise to 2 µs. When the first indication information includes TSF[9:2] of the first AP, time precision that may be indicated by the first indication information may be precise to 4 µs.

In this implementation, the offset between the first time information (the TU boundary of the first AP) and the second time information (the start time of the RTWT SP of the second AP) may be obtained based on an indication of the first indication information, and further, the start time of the RTWT SP of the second AP may be determined based on the first information (the first time information, that is, the TU boundary of the first AP) and the first indication information (the offset between the first time information and the second time information), and the first non-AP STA associated with the first AP may terminate the TXOP before the RTWT SP of the second AP arrives. In this way, the second AP successfully obtains a channel through contention when the RTWT SP starts, ensuring low-latency service communication of the second AP.

The following describes in detail a possible location for carrying the second information.

It may be understood that the location for carrying the second information herein is a location for carrying the first indication information included in the second information. The following describes a possible location for carrying the first indication information instead of the second information.

The first indication information may be carried in a TWT element in the first communication frame.

It may be understood that a field in the TWT element is reused to carry the first indication information, so that the offset between the first time information and the second time information can be indicated, and signaling overheads can be reduced to some extent.

Specifically, the TWT element in the first communication frame includes a broadcast TWT parameter set, and the first indication information may be carried in any one or more of the following locations in the broadcast TWT parameter set in the TWT element:
Location 1: a 5^{th} byte in the broadcast TWT parameter set.
Location 2: a 4^{th} bit to an 8^{th} bit (locations of B3 to B7) in a broadcast TWT information field in the broadcast TWT parameter set.
Location 3: a first field after the broadcast TWT information field in the broadcast TWT parameter set.

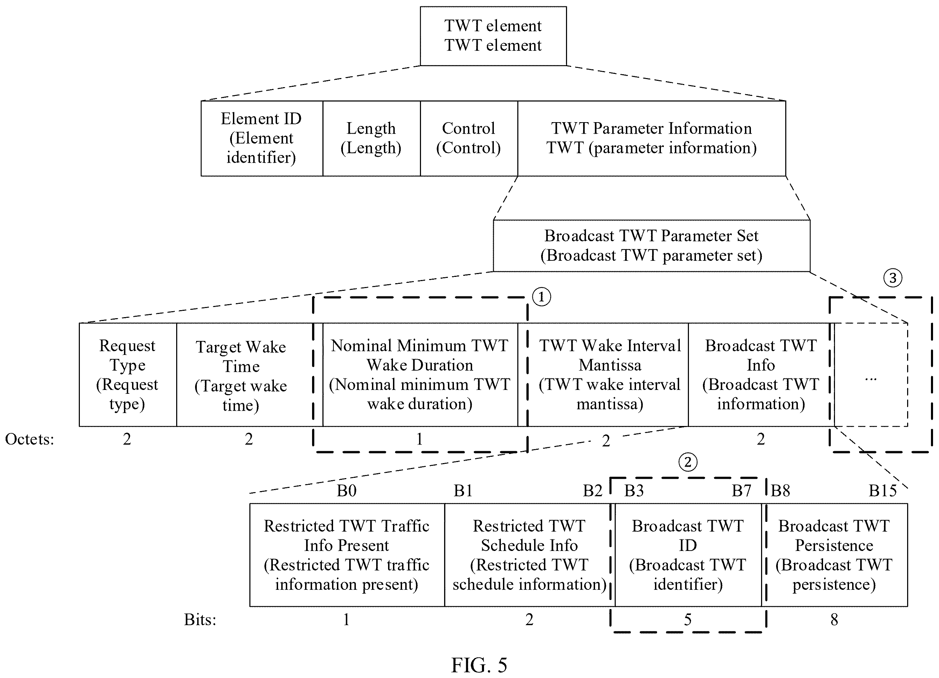

The following further describes, with reference to FIG. 5, a possible location for carrying the first indication information.

FIG. 5 is a diagram of a frame structure according to an embodiment of this application.

FIG. 5 is a diagram of a frame structure of the TWT element in the first communication frame. It may be understood that for specific descriptions of the frame structure of the TWT element, refer to a related standard or protocol. Details are not described one by one in this embodiment of this application.

It can be learned that the location 1 is a location of the dashed-line box ① in FIG. 5, that is, a location of a current nominal minimum TWT wake duration (Nominal Minimum TWT Wake Duration) field. The location 2 is a location of the dashed-line box ② in FIG. 5, that is, a location of a current broadcast TWT identifier (Broadcast TWT ID) field. The location 3 is a location of the dashed-line box ③ in FIG. 5. Optionally, the first field may be an existing field after the broadcast TWT information field in the broadcast TWT parameter set is reused, or may be a newly added field. The newly added field may be 1 byte or 2 bytes, and is used to carry the first indication information.

It may be understood that when there are sufficient idle fields in the broadcast TWT parameter set, the first indication information may be carried in the location 1 or the location 2. When there are no sufficient idle fields in the broadcast TWT parameter set, the first indication information may be carried in the location 3. This is not limited in this embodiment of this application.

### Implementation 2:

The second information includes second indication information. The second indication information may be N bits, and N is a positive integer less than or equal to 10. In other words, the second indication information may be 10 bits, or may be less than 10 bits, and a value of the second indication information is an integer ranging from 0 to 1023, and a value of the N bits indicates an offset between the first time information and the second time information.

It may be understood that a possible location for carrying the second indication information is the same as a possible location for carrying the second information in Implementation 1. Details are not described herein again.

It may be understood that the second indication information indicates, by using N bits, the offset between the TU boundary of the first AP and the start time of the RTWT SP of the second AP, and time precision that may be indicated by the second indication information varies with a quantity of bits included in the second indication information.

For example, when the second indication information is represented by using 10 bits, time precision that may be indicated by the second indication information is 1 µs. When the second indication information is represented by using 9 bits, time precision that may be indicated by the second indication information is 2 µs. When the second indication information is represented by using 8 bits, time precision that may be indicated by the second indication information is 4 µs.

It should be noted that, in this implementation, time indicated by the target wake time field in an RTWT parameter of the second AP carried in the TWT element is indicated based on the TSF timer of the first AP. When carrying the first indication information, the first AP needs to convert the first TU boundary into first time based on the TSF timer of the first AP, and then determines the second TU boundary as a closest TU boundary before the first time (which needs to be determined based on the TSF timer of the first AP), and denotes the second TU boundary as second time, and the first indication information in this case is a difference between the first time and the second time, that is, a value obtained by subtracting the second time from the first time; or determines the second TU boundary as a closest TU boundary after the first time (which needs to be determined based on the TSF timer of the first AP), and denotes the second TU boundary as second time, and the first indication information in this case is a difference between the second time and the first time, that is, a value obtained by subtracting the first time from the second time.

Optionally, a specific manner in which the first AP obtains the second time information (namely, the start time of the RTWT SP of the AP 2, for example, the moment t0 in FIG. 3, or the first TU boundary of the AP 2 in FIG. 3) is not limited in this embodiment. The first AP may receive a beacon frame or a probe response frame sent by the second AP, read the RTWT information of the second AP from the beacon frame or the probe response frame, and determine the second time information based on the RTWT information of the second AP. It may be understood that, because time that is indicated by a TWT field in the RTWT information of the second AP and that is in the beacon frame or the probe response frame sent by the second AP is indicated based on the TSF timer of the second AP, the time further needs to be converted, so that the time indicated by the TWT field is indicated based on the TSF timer of the first AP. During conversion, an error occurs because TU boundaries are not aligned, and the error part needs to be corrected by using the first indication information.

According to this embodiment of this application, the offset between the first time information (the TU boundary of the first AP) and the second time information (the start time of the RTWT SP of the second AP) may be obtained based on an indication of the second indication information, and further, the start time of the RTWT SP of the second AP may be determined based on the first information (the first time information, that is, the TU boundary of the first AP) and the second indication information (the offset between the first time information and the second time information), and the first non-AP STA associated with the first AP may terminate the TXOP before the RTWT SP of the second AP arrives. In this way, the second AP successfully obtains a channel through contention when the RTWT SP starts, ensuring low-latency service communication of the second AP.

It should be understood that Implementation 1 and Implementation 2 are merely used as two possible example descriptions of enabling the second information to indicate the offset between the first time information and the second time information, and this should not constitute a limitation on this embodiment of this application. Embodiments obtained based on supplements, proper variations, or combinations of the foregoing example implementations all fall within the protection scope of embodiments of this application.

In addition, optionally, the first communication frame further includes third indication information.

Specifically, the third indication information may be carried in the TWT element in the first communication frame, to indicate that the TWT information of the second AP exists in the TWT element.

It may be understood that the third indication information herein indicates the TWT information of the second AP that exists in the TWT element, and specifically refers to the start time of the RTWT SP of the second AP.

It may be understood that, because the TWT element may carry a plurality of broadcast TWT parameter sets, the third indication information may indicate that the TWT element carries only the TWT information of the second AP; or the third indication information may alternatively indicate that some broadcast TWT parameter sets carry the TWT information of the second AP, and some other broadcast TWT parameter sets carry TWT information of the first AP.

Further, the third indication information may be carried in any one or more of the following locations in the TWT element:
(1) The third indication information may be carried in an 8^{th} bit (namely, the location of B7) in a control field in the TWT element. In this case, the third indication information indicates that the TWT element carries only the TWT information of the second AP.
(2) The third indication information may be carried in a 16^{th} bit (namely, the location of B15) in a request type field in the broadcast TWT parameter set in the TWT element. In this case, the third indication information indicates that the broadcast TWT parameter set carries the TWT information of the second AP. Optionally, another broadcast TWT parameter set may carry the TWT information of the first AP, or may carry the TWT information of the second AP. This is not limited in this embodiment of this application.

Optionally, the first communication frame may be a beacon frame or a probe response frame.

When the first communication frame is the probe response frame, before generating the first communication frame, the first AP further receives a probe request frame sent by the first non-AP STA.

In this embodiment of this application, the start time of the RTWT SP of the AP 2 can be determined based on the first information and the second information in the first communication frame, and the non-AP STA 1 associated with the AP 1 can terminate the TXOP before the RTWT SP of the AP 2 arrives, so that the AP 2 successfully obtains a channel through contention when the RTWT SP starts, ensuring low-latency service communication of the AP 2.

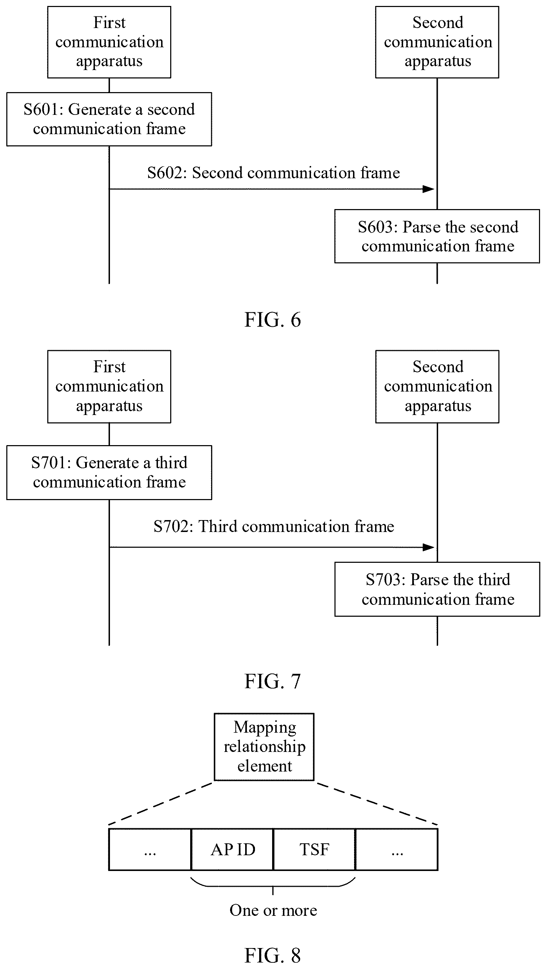

FIG. 6 is a schematic flowchart of a communication method according to an embodiment of this application. It can be understood that steps in this embodiment of this application may be considered as a proper variation of or supplement to the embodiment in FIG. 4. Alternatively, it can be understood that the communication method in this embodiment of this application may be considered as an embodiment that can be independently performed. This is not limited in this application. The communication method provided in this embodiment of this application is applied to the field of communication technologies, for example, multi-AP coordinated low-latency communication. The communication method includes but is not limited to the following steps.

S601: A first communication apparatus generates a second communication frame.

S602: The first communication apparatus sends the second communication frame to a second communication apparatus, and correspondingly, the second communication apparatus receives the second communication frame from the first communication apparatus.

S603: The second communication apparatus parses the second communication frame.

It may be understood that the first communication apparatus and the second communication apparatus in this embodiment of this application are consistent with the first communication apparatus and the second communication apparatus in FIG. 4. For details, refer to the descriptions of the first communication apparatus and the second communication apparatus in FIG. 4. Details are not described herein again.

For ease of description, the first communication apparatus is also referred to as a first AP or an AP 1 below, and the second communication apparatus is referred to as a first non-AP STA or a non-AP STA 1 below. Details are not described below again.

The second communication frame includes third information and fourth information.

The third information indicates third time information corresponding to a second AP (an AP 2), and the third time information may be specifically a TU boundary that is of the AP 2 and that is indicated based on a TSF timer of the AP 2, for example, the first TU boundary of the AP 2 in FIG. 3. The TU boundary herein refers to an 11^{th} bit to a 26^{th} bit in the TSF timer, and the third time information corresponds to start time of an RTWT SP of the AP 2.

The fourth information indicates a part or all of bits of the TSF timer of the AP 2, or indicates an offset or a difference between the TSF timer of the AP 2 and a TSF timer of the AP 1. The AP 2 and the AP 1 are different APs. The AP 2 herein may be a neighboring AP of the AP 1, for example, the AP 2 in FIG. 1a, FIG. 1b, and FIG. 3.

It may be understood that, when the fourth information indicates different quantities of bits of the TSF timer of the AP 2, time precision and time ranges that may be indicated by the fourth information are different.

For example, the fourth information may be m consecutive bits of the TSF timer of the second AP, and may be from a bit k to a bit (k+m-1) of the TSF timer of the second AP, that is, TSF[k+m-1:k]. When k=0 and m=64, the fourth information is all of the bits of the TSF timer of the second AP. When m<64, the fourth information is a part of the bits of the TSF timer of the second AP.

It may be understood that k is an integer from 0 to 63, m is an integer from 1 to 64, and a value of (k+m-1) is a positive integer not greater than 63. A smaller value of k indicates higher precision of time indicated by a target wake time field. Because the precision of the time indicated by the target wake time field is improved, a time range that can be represented by the target wake time field is inevitably narrowed.

It should be noted that, in actual application, k may be 0, 1, 2, 3, 4, 5, or the like, but should not be a larger number. This causes insufficient precision of the TSF timer, and consequently, TXOP time is incorrectly determined.

Further, a specific implementation of "the second communication apparatus parses the second communication frame" in step S603 may be as follows:

The non-AP STA 1 associated with the AP 1 determines the third information and the fourth information based on the second communication frame, and then determines the start time of the restricted target wake time service period RTWT SP of the AP 2 based on the third information and the fourth information. For details of the third information and the fourth information, refer to the descriptions of the second communication frame. Details are not described herein again.

The following describes in detail a possible location for carrying the fourth information.

The fourth information may be carried in a TWT element in the second communication frame.

It may be understood that a field in the TWT element is reused to carry the fourth information, so that a part or all of the bits of the TSF timer of the second AP or the offset between the TSF timer of the second AP and the TSF timer of the first AP can be indicated, and signaling overheads can be reduced to some extent.

Specifically, the TWT element in the second communication frame includes a broadcast TWT parameter set, and the fourth information may be carried in any one or more of the following locations in the broadcast TWT parameter set in the TWT element:
Location 1: a 5^{th} byte in the broadcast TWT parameter set.
Location 2: a 4^{th} bit to an 8^{th} bit (locations of B3 to B7) in a broadcast TWT information field in the broadcast TWT parameter set.
Location 3: a second field after the broadcast TWT information field in the broadcast TWT parameter set. Optionally, the second field may be an existing field after the broadcast TWT information field in the broadcast TWT parameter set is reused, or may be a newly added field. The newly added field may be 8 bytes, and is used to carry the fourth information.

It should be understood that the possible location (the location 1, the location 2, and the location 3) that is for carrying the fourth information and that corresponds to the location in the frame structure of the TWT element shown in FIG. 5 is the same as the possible location (the location 1, the location 2, and the location 3) that is for carrying the first indication information and that corresponds to the location in the frame structure of the TWT element shown in FIG. 5. For details, refer to related descriptions of the possible location for carrying the first indication information. Details are not described herein again.

It may be understood that, when the fourth information indicates a small quantity of bits (for example, less than 13 bits) of the TSF timer of the second AP, and there are sufficient idle fields in the broadcast TWT parameter set, the fourth information may be carried in the location 1 or the location 2. When the fourth information indicates a large quantity of bits (for example, not less than 13 bits, or even all of the bits of the TSF timer of the second AP) of the TSF timer of the second AP, the fourth information may be carried in the location 3. This is not limited in this embodiment of this application.

In a possible implementation, P most significant bits of the TSF timer of the second AP are the same as P most significant bits of the TSF timer of the first AP, and P is a positive integer less than 64.

It may be understood that, when the fourth information indicates a small quantity of bits (for example, less than 13 bits) of the TSF timer of the second AP, that is, a value of m is small, an additional restriction further needs to be added to the TSF timer of the first AP and the TSF timer of the second AP, and the P most significant bits of the TSF timer of the second AP need to be the same as the P most significant bits of the TSF timer of the first AP, that is, the TSF timer of the second AP and the TSF timer of the first AP keep the most significant bits the same. In this case, P+m=64-k. This case is a case in which the fourth information indicates a part of the bits (namely, the m consecutive bits) of the TSF timer of the second AP. For example, a (k+m+1)^{th} bit to a 64^{th} bit of the TSF timer of the second AP and a (k+m+1)^{th} bit to a 64^{th} bit of the TSF timer of the first AP are always the same, that is, TSF[63:k+m] of the second AP and TSF[63:k+m] of the first AP are always the same. In this case, the first non-AP STA may obtain most bits of the TSF timer of the second AP (that is, TSF[63:k] of the second AP) based on the most significant bits of the TSF timer of the first AP (that is, TSF[63:k+m] of the first AP) and fewer least significant bits of the TSF timer of the second AP (that is, TSF[k+m-1:k] of the second AP), so that the first non-AP STA can determine, based on the TU boundary of the second AP and the bits of the TSF timer of the second AP, the time indicated by the TWT field in the RTWT parameter of the second AP, that is, the start time of the RTWT SP of the second AP.

It can be learned with reference to the description in FIG. 3 that, in a current multi-AP (including but not limited to the AP 1 and the AP 2) coordinated low-latency communication scenario, because TSF timers of the AP 1 and the AP 2 are independently selected, TU boundaries of the AP 1 and the AP 2 may not be aligned. As a result, the non-AP STA 1 associated with the AP 1 cannot correctly obtain the start time of the RTWT SP of the AP 2 during communication with the AP 1, and cannot terminate a TXOP before the RTWT SP of the AP 2 arrives. Consequently, the AP 2 cannot successfully obtain a channel through contention when the RTWT SP starts, and low-latency service communication of the AP 2 cannot be ensured.

However, in this embodiment of this application, a part or all of the bits of the TSF timer of the AP 2 may be directly or indirectly obtained based on an indication of the fourth information, and then the start time of the RTWT SP of the AP 2 may be determined based on the third time information indicated by the third information in the second communication frame, that is, based on the TU boundary, of the AP 2, indicated based on the TSF timer of the AP 2, and a part or all of the bits of the TSF timer, of the AP 2, directly or indirectly indicated by the fourth information in the second communication frame, and the non-AP STA 1 associated with the AP 1 may terminate the TXOP before the RTWT SP of the AP 2 arrives, so that the AP 2 successfully obtains a channel through contention when the RTWT SP starts, ensuring low-latency service communication of the AP 2.

In addition, optionally, the second communication frame further includes third indication information.

Specifically, the third indication information may be carried in the TWT element in the second communication frame, to indicate that the TWT information of the second AP exists in the TWT element.

It may be understood that the third indication information herein indicates the TWT information of the second AP that exists in the TWT element, and specifically refers to the start time of the RTWT SP of the second AP.

It may be understood that, because the TWT element may carry a plurality of broadcast TWT parameter sets, the third indication information may indicate that the TWT element carries only the TWT information of the second AP; or the third indication information may alternatively indicate that some broadcast TWT parameter sets carry the TWT information of the second AP, and some other broadcast TWT parameter sets carry TWT information of the first AP.

Further, the third indication information may be carried in any one or more of the following locations in the TWT element:
(1) The third indication information may be carried in an 8^{th} bit (namely, the location of B7) in a control field in the TWT element. In this case, the third indication information indicates that the TWT element carries only the TWT information of the second AP.
(2) The third indication information may be carried in a 16^{th} bit (namely, the location of B 15) in a request type field in the broadcast TWT parameter set in the TWT element. In this case, the third indication information indicates that the broadcast TWT parameter set carries the TWT information of the second AP. Optionally, another broadcast TWT parameter set may carry the TWT information of the first AP, or may carry the TWT information of the second AP. This is not limited in this embodiment of this application.

Optionally, the second communication frame may be a beacon frame or a probe response frame.

When the second communication frame is the probe response frame, before generating the second communication frame, the first AP further receives a probe request frame sent by the first non-AP STA.

In this embodiment of this application, the start time of the RTWT SP of the AP 2 can be determined based on the third information and the fourth information in the second communication frame, and the non-AP STA 1 associated with the AP 1 can terminate the TXOP before the RTWT SP of the AP 2 arrives, so that the AP 2 successfully obtains a channel through contention when the RTWT SP starts, ensuring low-latency service communication of the AP 2.

FIG. 7 is a schematic flowchart of a communication method according to an embodiment of this application. It may be understood that the steps in this embodiment of this application may be considered as a proper variation or supplement to the embodiment in FIG. 4 or FIG. 6. Alternatively, it can be understood that the communication method in this embodiment of this application may be considered as an embodiment that can be independently performed. This is not limited in this application. The communication method provided in this embodiment of this application is applied to the field of communication technologies, for example, multi-AP coordinated low-latency communication. The communication method includes but is not limited to the following steps.

S701: A first communication apparatus generates a third communication frame.

S702: The first communication apparatus sends the third communication frame to a second communication apparatus, and correspondingly, the second communication apparatus receives the third communication frame from the first communication apparatus.

S703: The second communication apparatus parses the third communication frame.

It may be understood that the first communication apparatus and the second communication apparatus in this embodiment of this application are consistent with the first communication apparatus and the second communication apparatus in FIG. 4. For details, refer to the descriptions of the first communication apparatus and the second communication apparatus in FIG. 4. Details are not described herein again.

For ease of description, the first communication apparatus is also referred to as a first AP or an AP 1 below, and the second communication apparatus is referred to as a first non-AP STA or a non-AP STA 1. Details are not described below again.

The third communication frame includes third information and fifth information.

The third information indicates third time information corresponding to a second AP (an AP 2), and the third time information may be specifically a TU boundary that is of the AP 2 and that is indicated based on a TSF timer of the AP 2, for example, the first TU boundary of the AP 2 in FIG. 3. The TU boundary herein refers to an 11^{th} bit to a 26^{th} bit in the TSF timer, and the third time information corresponds to start time of an RTWT SP of the AP 2.

The fifth information indicates an identifier of the AP 2, there is the mapping relationship between the identifier of the AP 2 and the TSF timer of the AP 2, and the AP 2 and the AP 1 are different APs. The AP 2 herein may be a neighboring AP of the AP 1, for example, the AP 2 in FIG. 1a, FIG. 1b, and FIG. 3.

It may be understood that a part or all of bits of the TSF timer of the AP 2 that are mapped to the identifier of the AP 2 may be found by using the identifier of the AP 2 as an index.

Further, a specific implementation of "the second communication apparatus parses the third communication frame" in step S703 may be as follows:

The non-AP STA 1 associated with the AP 1 determines the third information and the fifth information based on the third communication frame, and then determines the start time of the restricted target wake time service period RTWT SP of the AP 2 based on the third information and the fifth information. For details of the third information and the fifth information, refer to the descriptions of the third communication frame. Details are not described herein again.

The following describes in detail a possible location for carrying the fifth information.

The fifth information may be carried in a TWT element in the third communication frame.

It may be understood that a field in the TWT element is reused to carry the fifth information, so that the TSF timer of the second AP can be indirectly obtained by indicating the identifier of the second AP, and signaling overheads can be reduced to some extent.

Specifically, the TWT element in the third communication frame includes a broadcast TWT parameter set, and the fifth information may be carried in any one or more of the following locations in the broadcast TWT parameter set in the TWT element:
Location 1: a 5^{th} byte in the broadcast TWT parameter set.
Location 2: a 4^{th} bit to an 8^{th} bit (locations of B3 to B7) in a broadcast TWT information field in the broadcast TWT parameter set.

It should be understood that the possible location (the location 1 and the location 2) that is for carrying the fifth information and that corresponds to the location in the frame structure of the TWT element shown in FIG. 5 is the same as the possible location (the location 1 and the location 2) that is for carrying the first indication information and that corresponds to the location in the frame structure of the TWT element shown in FIG. 5. For details, refer to related descriptions of the possible location for carrying the first indication information. Details are not described herein again.

Optionally, information about the mapping relationship between the identifier of the second AP and the TSF timer of the second AP may be carried in a field other than the TWT element in the third communication frame, or may be carried in a communication frame different from the third communication frame, and carried in a newly defined information element.

FIG. 8 is a diagram of a frame structure according to an embodiment of this application.

FIG. 8 is a diagram of a frame structure of a mapping relationship element in the third communication frame or a communication frame different from the third communication frame.

It can be learned that the mapping relationship element carries an identifier or identifiers of one or more APs and a TSF timer or TSF timers corresponding to the identifier or the identifiers of the one or more APs.

It may be understood that an identifier of a second AP is used as an index, and a part or all of bits of a TSF timer that is of the second AP and that is mapped to the identifier of the second AP may be found based on a mapping relationship between the identifier of the second AP and the TSF timer of the second AP.

It can be learned with reference to the description in FIG. 3 that, in a current multi-AP (including but not limited to the AP 1 and the AP 2) coordinated low-latency communication scenario, because TSF timers of the AP 1 and the AP 2 are independently selected, TU boundaries of the AP 1 and the AP 2 may not be aligned. As a result, the non-AP STA 1 associated with the AP 1 cannot correctly obtain the start time of the RTWT SP of the AP 2 during communication with the AP 1, and cannot terminate a TXOP before the RTWT SP of the AP 2 arrives. Consequently, the AP 2 cannot successfully obtain a channel through contention when the RTWT SP starts, and low-latency service communication of the AP 2 cannot be ensured.

However, in this embodiment of this application, the TSF timer of the AP 2 may be indirectly obtained based on an indication of fifth information, and then start time of an RTWT SP of the AP 2 may be determined based on third time information indicated by third information in a third communication frame, that is, based on a TU boundary, of the AP 2, indicated based on the TSF timer of the AP 2, and the TSF timer, of the AP 2, indirectly indicated by the fifth information in the third communication frame, and a non-AP STA 1 associated with an AP 1 may terminate a TXOP before the RTWT SP of the AP 2 arrives, so that the AP 2 successfully obtains a channel through contention when the RTWT SP starts, ensuring low-latency service communication of the AP 2.

In addition, optionally, the third communication frame further includes third indication information.

Specifically, the third indication information may be carried in a TWT element in the third communication frame, to indicate that TWT information of the second AP exists in the TWT element.

It may be understood that the third indication information herein indicates the TWT information of the second AP that exists in the TWT element, and specifically refers to the start time of the RTWT SP of the second AP.

It may be understood that, because the TWT element may carry a plurality of broadcast TWT parameter sets, the third indication information may indicate that the TWT element carries only the TWT information of the second AP; or the third indication information may alternatively indicate that some broadcast TWT parameter sets carry the TWT information of the second AP, and some other broadcast TWT parameter sets carry TWT information of the first AP.

Further, the third indication information may be carried in any one or more of the following locations in the TWT element:
(1) The third indication information may be carried in an 8^{th} bit (namely, the location of B7) in a control field in the TWT element. In this case, the third indication information indicates that the TWT element carries only the TWT information of the second AP.
(2) The third indication information may be carried in a 16^{th} bit (namely, the location of B15) in a request type field in the broadcast TWT parameter set in the TWT element. In this case, the third indication information indicates that the broadcast TWT parameter set carries the TWT information of the second AP. Optionally, another broadcast TWT parameter set may carry the TWT information of the first AP, or may carry the TWT information of the second AP. This is not limited in this embodiment of this application.

Optionally, the third communication frame may be a beacon frame or a probe response frame.

When the third communication frame is the probe response frame, before generating the third communication frame, the first AP further receives a probe request frame sent by the first non-AP STA.

In this embodiment of this application, the start time of the RTWT SP of the AP 2 can be determined based on the third information and the fifth information in the third communication frame, and the non-AP STA 1 associated with the AP 1 can terminate the TXOP before the RTWT SP of the AP 2 arrives, so that the AP 2 successfully obtains a channel through contention when the RTWT SP starts, ensuring low-latency service communication of the AP 2.

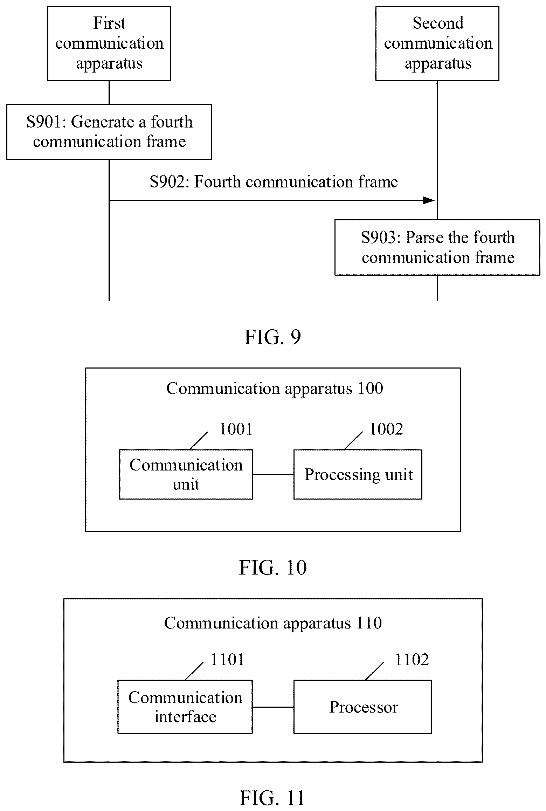

FIG. 9 is a schematic flowchart of a communication method according to an embodiment of this application. It may be understood that the steps in this embodiment of this application may be considered as a proper variation or supplement to the embodiment in FIG. 4, FIG. 6, or FIG. 7. Alternatively, it can be understood that the communication method in this embodiment of this application may be considered as an embodiment that can be independently performed. This is not limited in this application. The communication method provided in this embodiment of this application is applied to the field of communication technologies, for example, multi-AP coordinated low-latency communication. The communication method includes but is not limited to the following steps.

S901: A first communication apparatus generates a fourth communication frame.

S902: The first communication apparatus sends the fourth communication frame to a second communication apparatus, and correspondingly, the second communication apparatus receives the fourth communication frame from the first communication apparatus.

S903: The second communication apparatus parses the fourth communication frame.

It may be understood that the first communication apparatus and the second communication apparatus in this embodiment of this application are consistent with the first communication apparatus and the second communication apparatus in FIG. 4. For details, refer to the descriptions of the first communication apparatus and the second communication apparatus in FIG. 4. Details are not described herein again.

For ease of description, the first communication apparatus is also referred to as a first AP or an AP 1 below, and the second communication apparatus is referred to as a first non-AP STA or a non-AP STA 1. Details are not described below again.

The fourth communication frame includes sixth information.

The sixth information indicates 16 consecutive bits of a TSF timer of the AP 1, a least significant bit in the 16 consecutive bits is any one of 10 least significant bits in the TSF timer of the AP 1, the TSF timer of the AP 1 corresponds to start time of an RTWT SP of an AP 2, and the AP 2 and the AP 1 are different APs. The AP 2 herein may be a neighboring AP of the AP 1, for example, the AP 2 in FIG. 1a, FIG. 1b, and FIG. 3.

It may be understood that the sixth information may include the 16 consecutive bits of the TSF timer of the AP 1. In this case, the sixth information directly indicates the 16 consecutive bits of the TSF timer of the AP 1. The sixth information may alternatively include index information indirectly indicating the 16 consecutive bits of the TSF timer of the AP 1. This is not limited in this embodiment of this application.

It may be understood that the 16 consecutive bits indicated by the sixth information correspond to different locations in the TSF timer of the AP 1, and time precision indicated by the sixth information may be also different. However, a principle of this embodiment of this application is to change, by changing a location that is in the TSF timer of the AP 1 and that corresponds to the 16 consecutive bits indicated by the sixth information, time precision indicated by the TSF timer of the AP 1, so that time indicated by the TSF timer of the AP 1 can be infinitely close to the start time of the RTWT SP of the AP 2.

For example, the sixth information may be from a bit k to a bit (k+15) of the TSF timer of the first AP, that is, TSF[k+15:k], where k is an integer from 0 to 9.

When k=0, precision of time indicated by a target wake time field may reach 1 µs, and therefore, the start time of the RTWT SP of the AP 2 may be precisely indicated. When k=1, precision of time indicated by a target wake time field may reach 2 µs, and therefore, there is a maximum of 1 µs error between the indicated time and the start time of the RTWT SP of the AP 2. When k=2, precision of time indicated by a target wake time field may reach 4 µs, and therefore, there is a maximum of 3 µs error between the indicated time and the start time of the RTWT SP of the AP 2. When k=3, precision of time indicated by a target wake time field may reach 8 µs, and therefore, there is a maximum of 7 µs error between the indicated time and the start time of the RTWT SP of the AP 2. When k=4, precision of time indicated by a target wake time field may reach 16 µs, and therefore, there is a maximum of 15 µs error between the indicated time and the start time of the RTWT SP of the AP 2. When k=5, precision of time indicated by the target wake time field may reach 32 µs, and therefore, there is a maximum of 31 µs error between the indicated time and the start time of the RTWT SP of the AP 2.

It may be understood that when the error is less than a specific value (for example, less than 31 µs), it may be considered that even if a station terminates a TXOP in advance, the station cannot obtain a channel through contention again within time in an allowable error range. Therefore, low-latency service transmission of the second AP in the RTWT SP is not affected.

Because precision of the time indicated by the target wake time field is improved, a time range that can be represented by the target wake time field is inevitably narrowed. When k=0, duration that can be represented by the target wake time field reaches 65535 µs. When k=5, the target wake time field can still represent 2047 TUs, and impact is small.

Further, a specific implementation of "the second communication apparatus parses the fourth communication frame" in step S903 may be as follows:
The non-AP STA 1 associated with the AP 1 determines the sixth information based on the fourth communication frame, and then determines the start time of the restricted target wake time service period RTWT SP of the AP 2 based on the sixth information. For details of the sixth information, refer to the description of the fourth communication frame. Details are not described herein again.

The following describes in detail a possible location for carrying the sixth information.

The sixth information may be carried in a TWT element in the fourth communication frame. Correspondingly, a broadcast TWT parameter set in the TWT element carries RTWT information of the second AP.

It may be understood that a field in the TWT element is reused to carry the sixth information, so that the 16 consecutive bits of the TSF timer of the AP 1 can be indicated, and signaling overheads can be reduced to some extent.

Optionally, it may be specified that when the broadcast TWT parameter set carries RTWT information of the first AP, a least significant bit of the target wake time field corresponds to an 11^{th} bit of the TSF timer. When the broadcast TWT parameter set carries the RTWT information of the second AP, a least significant bit of the target wake time field corresponds to a (k+1)^{th} bit of the TSF timer.

Optionally, the fourth communication frame may further include seventh information.

Different values of the seventh information may indicate a bit that is in the TSF timer of the first AP and that corresponds to the least significant bit in the 16 consecutive bits.

It may be understood that the seventh information may include index information indicating a correspondence between the least significant bit in the 16 consecutive bits and a bit in the TSF timer of the first AP. In this way, the bit that is in the TSF timer of the first AP and that corresponds to the least significant bit in the 16 consecutive bits is indicated.

It may be understood that a trade-off may be performed, based on the correspondence between the least significant bit in the 16 consecutive bits indicated by the seventh information and the bit in the TSF timer of the first AP, between time precision and time ranges indicated by the seventh information, to obtain more precise start time of the RTWT SP of the AP 2. For example, when the start time of the RTWT SP of the AP 2 is in a far future, a large value of k may be used to obtain lower time precision and a large time range. When the start time of the RTWT SP of the AP 2 is in a near future, a smaller value of k may be used to obtain a smaller time range and higher time precision.

Optionally, the fourth communication frame may further include eighth information.

The eighth information indicates whether time indicated by a TWT field is indicated based on the TSF timer of the first AP or the TSF timer of the second AP. In this way, time indicated in different cases can be considered, and more precise start time of the RTWT SP of the AP 2 can be obtained.

It can be learned with reference to the description in FIG. 3 that, in a current multi-AP (including but not limited to the AP 1 and the AP 2) coordinated low-latency communication scenario, because TSF timers of the AP 1 and the AP 2 are independently selected, TU boundaries of the AP 1 and the AP 2 may not be aligned. As a result, the non-AP STA 1 associated with the AP 1 cannot correctly obtain the start time of the RTWT SP of the AP 2 during communication with the AP 1, and cannot terminate a TXOP before the RTWT SP of the AP 2 arrives. Consequently, the AP 2 cannot successfully obtain a channel through contention when the RTWT SP starts, and low-latency service communication of the AP 2 cannot be ensured.

However, in this embodiment of this application, time precision indicated by the TSF timer of the AP 1 may be changed by changing a location that is in the TSF timer of the AP 1 and that corresponds to the 16 consecutive bits indicated by the sixth information, so that time indicated by the TSF timer of the AP 1 can be infinitely close to the start time of the RTWT SP of the AP 2, to determine the start time of the RTWT SP of the AP 2, and the non-AP STA 1 associated with the AP 1 can terminate the TXOP before the RTWT SP of the AP 2 arrives. In this way, the AP 2 successfully obtains a channel through contention when the RTWT SP starts, ensuring low-latency service communication of the AP 2.

In addition, optionally, the fourth communication frame further includes third indication information.

Specifically, the third indication information may be carried in a TWT element in the fourth communication frame, to indicate that TWT information of the second AP exists in the TWT element.

It may be understood that the third indication information herein indicates the TWT information of the second AP that exists in the TWT element, and specifically refers to the start time of the RTWT SP of the second AP.

It may be understood that, because the TWT element may carry a plurality of broadcast TWT parameter sets, the third indication information may indicate that the TWT element carries only the TWT information of the second AP; or the third indication information may alternatively indicate that some broadcast TWT parameter sets carry the TWT information of the second AP, and some other broadcast TWT parameter sets carry TWT information of the first AP.

Further, the third indication information may be carried in any one or more of the following locations in the TWT element:
(1) The third indication information may be carried in an 8^{th} bit (namely, the location of B7) in a control field in the TWT element. In this case, the third indication information indicates that the TWT element carries only the TWT information of the second AP.
(2) The third indication information may be carried in a 16^{th} bit (namely, the location of B 15) in a request type field in the broadcast TWT parameter set in the TWT element. In this case, the third indication information indicates that the broadcast TWT parameter set carries the TWT information of the second AP. Optionally, another broadcast TWT parameter set may carry the TWT information of the first AP, or may carry the TWT information of the second AP. This is not limited in this embodiment of this application.

Optionally, the fourth communication frame may be a beacon frame or a probe response frame.

When the fourth communication frame is the probe response frame, before generating the fourth communication frame, the first AP further receives a probe request frame sent by the first non-AP STA.

In this embodiment of this application, the start time of the RTWT SP of the AP 2 can be determined based on the sixth information in the fourth communication frame, and the non-AP STA 1 associated with the AP 1 can terminate the TXOP before the RTWT SP of the AP 2 arrives, so that the AP 2 successfully obtains a channel through contention when the RTWT SP starts, ensuring low-latency service communication of the AP 2.

It should be understood that in embodiments shown in this application, a "field" is used as an example for illustration, and a "field" is not specifically distinguished from a "subfield" and the like. Although the "field" and the "subfield" are not specifically distinguished in embodiments shown in this application, a person skilled in the art may adaptively distinguish between a relationship between the fields (or elements and fields) shown in this application.

The foregoing details the methods in embodiments of this application. The following provides an apparatus for implementing any one of the methods in embodiments of this application. For example, an apparatus including units (or means) for implementing steps performed by a device in any one of the foregoing methods is provided.

FIG. 10 is a diagram of a structure of a communication apparatus according to an embodiment of this application.

As shown in FIG. 10, the communication apparatus 100 may include a communication unit 1001 and a processing unit 1002. The communication unit 1001 and the processing unit 1002 may be software, hardware, or a combination of software and hardware.

The communication unit 1001 may implement a sending function and/or a receiving function, and the communication unit 1001 may also be described as a transceiver unit. Alternatively, the communication unit 1001 may be a unit integrating an obtaining unit and a sending unit. The obtaining unit is configured to implement a receiving function, and the sending unit is configured to implement a sending function. Optionally, the communication unit 1001 may be configured to receive information sent by another apparatus, and may be further configured to send information to the another apparatus.

In a possible design, the communication apparatus 100 may correspond to the first communication apparatus in the method embodiments shown in FIG. 4, FIG. 6, FIG. 7, and FIG. 9. For example, the communication apparatus 100 may be the first communication apparatus, or may be a chip in the first communication apparatus. The communication apparatus 100 may include units configured to perform operations performed by the first communication apparatus in the method embodiments shown in FIG. 4, FIG. 6, FIG. 7, and FIG. 9. In addition, the units in the communication apparatus 100 are respectively for implementing the operations performed by the first communication apparatus in the method embodiments shown in FIG. 4, FIG. 6, FIG. 7, and FIG. 9. The units are described as follows:

The processing unit 1002 is configured to generate a first communication frame, where the first communication frame includes first information and second information, the first information indicates first time information corresponding to a first access point AP, the second information indicates an offset between the first time information and second time information, and the second time information is start time of a restricted target wake time service period RTWT SP of a second AP; and
the communication unit 1001 is configured to send the first communication frame.

Alternatively,
the processing unit 1002 is configured to generate a second communication frame, where the second communication frame includes third information and fourth information, the third information indicates third time information corresponding to a second access point AP, the fourth information indicates a part or all of bits of a time synchronization function timer TSF timer of the second AP, or indicates an offset between a TSF timer of the second AP and a TSF timer of a first AP, and the third time information corresponds to start time of a restricted target wake time service period RTWT SP of the second AP; and
the communication unit 1001 is configured to send the second communication frame.

Alternatively,
the processing unit 1002 is configured to generate a third communication frame, where the third communication frame includes third information and fifth information, the third information indicates third time information corresponding to a second access point AP, the fifth information indicates an identifier of the second AP, there is a mapping relationship between the identifier of the second AP and a time synchronization function timer TSF timer of the second AP, and the third time information corresponds to start time of a restricted target wake time service period RTWT SP of the second AP; and
the communication unit 1001 is configured to send the third communication frame.

Alternatively,
the processing unit 1002 is configured to generate a fourth communication frame, where the fourth communication frame includes sixth information, the sixth information indicates 16 consecutive bits of a time synchronization function timer TSF timer of a first access point AP, a least significant bit in the 16 consecutive bits is any one of 10 least significant bits in the TSF timer of the first AP, and the TSF timer of the first AP corresponds to start time of a restricted target wake time service period RTWT SP of a second AP; and
the communication unit 1001 is configured to send the fourth communication frame.

For methods performed by the processing unit 1002 and the communication unit 1001, refer to the methods corresponding to FIG. 4, FIG. 6, FIG. 7, and FIG. 9. Details are not described herein again.

For technical effect of this design and any possible implementation, refer to the descriptions of the technical effect of the methods corresponding to FIG. 4, FIG. 6, FIG. 7, and FIG. 9.

In another possible design of the communication apparatus 100 shown in FIG. 10, the communication apparatus 100 may correspond to the second communication apparatus in the method embodiments shown in FIG. 4, FIG. 6, FIG. 7, and FIG. 9. For example, the communication apparatus 100 may be the second communication apparatus, or may be a chip in the second communication apparatus. The communication apparatus 100 may include units configured to perform operations performed by the second communication apparatus in the method embodiments shown in FIG. 4, FIG. 6, FIG. 7, and FIG. 9. In addition, the units in the communication apparatus 100 are respectively for implementing the operations performed by the second communication apparatus in the method embodiments shown in FIG. 4, FIG. 6, FIG. 7, and FIG. 9. The units are described as follows:
The communication unit 1001 is configured to receive a first communication frame, where the first communication frame includes first information and second information, the first information indicates first time information corresponding to a first access point AP, the second information indicates an offset between the first time information and second time information, and the second time information is start time of a restricted target wake time service period RTWT SP of a second AP; and
the processing unit 1002 is configured to parse the first communication frame.

Alternatively,
the communication unit 1001 is configured to receive a second communication frame, where the second communication frame includes third information and fourth information, the third information indicates third time information corresponding to a second access point AP, the fourth information indicates a part or all of bits of a time synchronization function timer TSF timer of the second AP, or indicates an offset between a TSF timer of the second AP and a TSF timer of a first AP, and the third time information corresponds to start time of a restricted target wake time service period RTWT SP of the second AP; and
the processing unit 1002 is configured to parse the second communication frame.

Alternatively,
the communication unit 1001 is configured to receive a third communication frame, where the third communication frame includes third information and fifth information, the third information indicates third time information corresponding to a second access point AP, the fifth information indicates an identifier of the second AP, there is a mapping relationship between the identifier of the second AP and a time synchronization function timer TSF timer of the second AP, and the third time information corresponds to start time of a restricted target wake time service period RTWT SP of the second AP; and
the processing unit 1002 is configured to parse the third communication frame.

Alternatively,
the communication unit 1001 is configured to receive a fourth communication frame, where the fourth communication frame includes sixth information, the sixth information indicates 16 consecutive bits of a time synchronization function timer TSF timer of a first access point AP, a least significant bit in the 16 consecutive bits is any one of 10 least significant bits in the TSF timer of the first AP, and the TSF timer of the first AP corresponds to start time of a restricted target wake time service period RTWT SP of a second AP; and
the processing unit 1002 is configured to parse the fourth communication frame.

For methods performed by the processing unit 1002 and the communication unit 1001, refer to the methods corresponding to FIG. 4, FIG. 6, FIG. 7, and FIG. 9. Details are not described herein again.

For technical effect of this design and any possible implementation, refer to the descriptions of the technical effect of the methods corresponding to FIG. 4, FIG. 6, FIG. 7, and FIG. 9.

Optionally, in the communication apparatus according to any one of the foregoing designs and any one of the possible implementations:
In an implementation, the communication apparatus is a communication device. When the communication apparatus is the communication device, the communication unit may be a transceiver or an input/output interface, and the processing unit may be at least one processor. Optionally, the transceiver may be a transceiver circuit. Optionally, the input/output interface may be an input/output circuit.

In another implementation, the communication apparatus is a chip (system) or a circuit used for a communication device. When the communication apparatus is the chip (system) or the circuit used in the communication device, the communication unit may be a communication interface (input/output interface), an interface circuit, an output circuit, an input circuit, a pin, a related circuit, or the like on the chip (system) or the circuit, and the processing unit may be at least one processor, a processing circuit, a logic circuit, or the like.

According to this embodiment of this application, the units in the apparatus shown in FIG. 10 may be separately or all combined into one or more other units, or one or more units in the apparatus may be further split into a plurality of units with more detailed functions. This can implement a same operation without affecting implementation of technical effect of this embodiment of this application. The foregoing units are obtained through division based on logical functions. In actual application, a function of one unit may be implemented by a plurality of units, or functions of a plurality of units are implemented by one unit. In other embodiments of this application, an electronic device may alternatively include other units. In actual application, the functions may be alternatively implemented with assistance of the other units, and may be implemented by a plurality of units in collaboration.

It should be noted that for implementation of the units, refer to corresponding descriptions of the method embodiments shown in FIG. 4, FIG. 6, FIG. 7, and FIG. 9.

In the communication apparatus 100 described in FIG. 10, the start time of the RTWT SP of the AP 2 can be determined, and the non-AP STA 1 associated with the AP 1 can terminate the TXOP before the RTWT SP of the AP 2 arrives, so that the AP 2 successfully obtains a channel through contention when the RTWT SP starts, ensuring low-latency service communication of the AP 2.

FIG. 11 is a diagram of a structure of a communication apparatus according to an embodiment of this application.

It should be understood that the communication apparatus 110 shown in FIG. 11 is merely an example. The communication apparatus in this embodiment of this application may further include another component, or include a component with a function similar to that of each component in FIG. 11, or does not necessarily need to include all components in FIG. 11.

The communication apparatus 110 includes a communication interface 1101 and at least one processor 1102.

The communication apparatus 110 may correspond to any node or device in the first communication apparatus and the second communication apparatus. The communication interface 1101 is configured to receive and send signals, and the at least one processor 1102 executes program instructions, to enable the communication apparatus 110 to implement a corresponding procedure of a method performed by a corresponding device in the foregoing method embodiments.

In a possible design, the communication apparatus 110 may correspond to the first communication apparatus in the method embodiments shown in FIG. 4, FIG. 6, FIG. 7, and FIG. 9. For example, the communication apparatus 110 may be the first communication apparatus, or may be a chip in the first communication apparatus. The communication apparatus 110 may include components configured to perform the operations performed by the first communication apparatus in the method embodiments. In addition, the components in the communication apparatus 110 are respectively for implementing the operations performed by the first communication apparatus in the method embodiments. Details may be described below.

The processor 1102 is configured to generate a first communication frame, where the first communication frame includes first information and second information, the first information indicates first time information corresponding to a first access point AP, the second information indicates an offset between the first time information and second time information, and the second time information is start time of a restricted target wake time service period RTWT SP of a second AP; and
the communication interface 1101 is configured to send the first communication frame.

Alternatively,
the processor 1102 is configured to generate a second communication frame, where the second communication frame includes third information and fourth information, the third information indicates third time information corresponding to a second access point AP, the fourth information indicates a part or all of bits of a time synchronization function timer TSF timer of the second AP, or indicates an offset between a TSF timer of the second AP and a TSF timer of a first AP, and the third time information corresponds to start time of a restricted target wake time service period RTWT SP of the second AP; and
the communication interface 1101 is configured to send the second communication frame.

Alternatively,
the processor 1102 is configured to generate a third communication frame, where the third communication frame includes third information and fifth information, the third information indicates third time information corresponding to a second access point AP, the fifth information indicates an identifier of the second AP, there is a mapping relationship between the identifier of the second AP and a time synchronization function timer TSF timer of the second AP, and the third time information corresponds to start time of a restricted target wake time service period RTWT SP of the second AP; and
the communication interface 1101 is configured to send the third communication frame.

Alternatively,
the processor 1102 is configured to generate a fourth communication frame, where the fourth communication frame includes sixth information, the sixth information indicates 16 consecutive bits of a time synchronization function timer TSF timer of a first access point AP, a least significant bit in the 16 consecutive bits is any one of 10 least significant bits in the TSF timer of the first AP, and the TSF timer of the first AP corresponds to start time of a restricted target wake time service period RTWT SP of a second AP; and
the communication interface 1101 is configured to send the fourth communication frame.

In another possible design, the communication apparatus 110 may correspond to the second communication apparatus in the method embodiments shown in FIG. 4, FIG. 6, FIG. 7, and FIG. 9. For example, the communication apparatus 110 may be the second communication apparatus, or may be a chip in the second communication apparatus. The communication apparatus 110 may include components configured to perform the operations performed by the second communication apparatus in the method embodiments. In addition, the components in the communication apparatus 110 are respectively for implementing the operations performed by the second communication apparatus in the method embodiments. Details may be described below.

The communication interface 1101 is configured to receive a first communication frame, where the first communication frame includes first information and second information, the first information indicates first time information corresponding to a first access point AP, the second information indicates an offset between the first time information and second time information, and the second time information is start time of a restricted target wake time service period RTWT SP of a second AP; and
the processor 1102 is configured to parse the first communication frame.

Alternatively,
the communication interface 1101 is configured to receive a second communication frame, where the second communication frame includes third information and fourth information, the third information indicates third time information corresponding to a second access point AP, the fourth information indicates a part or all of bits of a time synchronization function timer TSF timer of the second AP, or indicates an offset between a TSF timer of the second AP and a TSF timer of a first AP, and the third time information corresponds to start time of a restricted target wake time service period RTWT SP of the second AP; and
the processor 1102 is configured to parse the second communication frame.

Alternatively,
the communication interface 1101 is configured to receive a third communication frame, where the third communication frame includes third information and fifth information, the third information indicates third time information corresponding to a second access point AP, the fifth information indicates an identifier of the second AP, there is a mapping relationship between the identifier of the second AP and a time synchronization function timer TSF timer of the second AP, and the third time information corresponds to start time of a restricted target wake time service period RTWT SP of the second AP; and
the processor 1102 is configured to parse the third communication frame.

Alternatively,
the communication interface 1101 is configured to receive a fourth communication frame, where the fourth communication frame includes sixth information, the sixth information indicates 16 consecutive bits of a time synchronization function timer TSF timer of a first access point AP, a least significant bit in the 16 consecutive bits is any one of 10 least significant bits in the TSF timer of the first AP, and the TSF timer of the first AP corresponds to start time of a restricted target wake time service period RTWT SP of a second AP; and
the processor 1102 is configured to parse the fourth communication frame.

In the communication apparatus 110 described in FIG. 11, the start time of the RTWT SP of the AP 2 can be determined, and the non-AP STA 1 associated with the AP 1 can terminate the TXOP before the RTWT SP of the AP 2 arrives, so that the AP 2 successfully obtains a channel through contention when the RTWT SP starts, ensuring low-latency service communication of the AP 2.

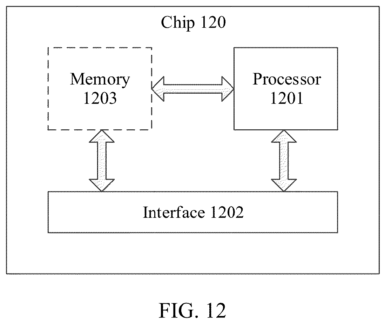

For a case in which the communication apparatus may be a chip or a chip system, refer to a diagram of a structure of a chip shown as FIG. 12.

As shown in FIG. 12, the chip 120 includes a processor 1201 and an interface 1202. There may be one or more processors 1201, and there may be a plurality of interfaces 1202. It should be noted that corresponding functions of the processor 1201 and the interface 1202 can be implemented by using a hardware design, or can be implemented by using a software design, or can be implemented by a combination of software and hardware. This is not limited herein.

Optionally, the chip 120 may further include a memory 1203, and the memory 1203 is configured to store necessary program instructions and data.

In this application, the processor 1201 may be configured to: invoke, from the memory 1203, a program for implementing the communication method provided in one or more embodiments of this application on one or more devices or nodes in the first communication apparatus and the second communication apparatus, and execute instructions included in the program. The interface 1202 may be configured to output an execution result of the processor 1201. In this application, the interface 1202 may be specifically configured to output each message or each piece of information of the processor 1201.

For the communication method provided in one or more embodiments of this application, refer to the embodiments shown in FIG. 4, FIG. 6, FIG. 7, and FIG. 9. Details are not described herein again.

The processor in embodiments of this application may be a central processing unit (Central Processing Unit, CPU), or the processor may be another general-purpose processor, a digital signal processor (digital signal processor, DSP), an application-specific integrated circuit (application-specific integrated circuit, ASIC), a field programmable gate array (field programmable gate array, FPGA) or another programmable logic device, a discrete gate or a transistor logic device, a discrete hardware component, or the like. The general-purpose processor may be a microprocessor, or the processor may be any conventional processor or the like.

The memory in embodiments of this application is configured to provide storage space, and the storage space may store data such as an operating system and a computer program. The memory includes but is not limited to a random access memory (random access memory, RAM), a read-only memory (read-only memory, ROM), an erasable programmable read-only memory (erasable programmable read-only memory, EPROM), or a compact disc read-only memory (compact disc read-only memory, CD-ROM).

According to the methods provided in embodiments of this application, an embodiment of this application further provides a computer-readable storage medium. The computer-readable storage medium stores a computer program. When the computer program is run on one or more processors, the methods shown in FIG. 4, FIG. 6, FIG. 7, and FIG. 9 may be implemented.

According to the methods provided in embodiments of this application, an embodiment of this application further provides a computer program product. The computer program product includes a computer program. When the computer program is run on a processor, the methods shown in FIG. 4, FIG. 6, FIG. 7, and FIG. 9 may be implemented.

An embodiment of this application further provides a system. The system includes at least one of the following: the communication apparatus 100, the communication apparatus 110, or the chip 120, and is configured to perform steps performed by a corresponding device in any one of the embodiments in FIG. 4, FIG. 6, FIG. 7, and FIG. 9.

An embodiment of this application further provides a system. The system includes a first communication apparatus (for example, a first AP or an AP 1) and a second communication apparatus (for example, a first non-AP STA or a non-AP STA 1), the first communication apparatus is configured to perform the steps performed by the first communication apparatus in any one of the embodiments in FIG. 4, FIG. 6, FIG. 7, and FIG. 9, and the second communication apparatus is configured to perform the steps performed by the second communication apparatus in any one of the embodiments in FIG. 4, FIG. 6, FIG. 7, and FIG. 9.

An embodiment of this application further provides a processing apparatus. The apparatus includes a processor and an interface. The processor is configured to perform the method in any one of the method embodiments.

It should be understood that the processing apparatus may be a chip. For example, the processing apparatus may be a field programmable gate array (field programmable gate array, FPGA), or may be a general-purpose processor, a digital signal processor (digital signal processor, DSP), an application-specific integrated circuit (application-specific integrated circuit, ASIC), a field programmable gate array (field programmable gate array, FPGA) or another programmable logic device, a discrete gate or transistor logic device, a discrete hardware component, may be a system on chip (system on chip, SoC), may be a central processor unit (central processor unit, CPU), may be a network processor (network processor, NP), may be a digital signal processor (digital signal processor, DSP), may be a micro controller unit (micro controller unit, MCU), and may be a programmable logic device (programmable logic device, PLD) or another integrated chip. It may implement or perform the methods, the steps, and logical block diagrams that are disclosed in embodiments of this application. The general-purpose processor may be a microprocessor, or the processor may be any conventional processor or the like. The steps in the methods disclosed with reference to embodiments of this application may be directly performed and completed by a hardware decoding processor, or may be performed and completed by using a combination of hardware in the decoding processor and a software module. The software module may be located in a mature storage medium in the art, such as a random access memory, a flash memory, a read-only memory, a programmable read-only memory, an electrically erasable programmable memory, or a register. The storage medium is located in the memory, and a processor reads information in the memory and completes the steps in the foregoing methods in combination with hardware of the processor.

It may be understood that the memory in this embodiment of this application may be a volatile memory or a nonvolatile memory, or may include a volatile memory and a nonvolatile memory. The nonvolatile memory may be a read-only memory (read-only memory, ROM), a programmable read-only memory (programmable ROM, PROM), an erasable programmable read-only memory (erasable PROM, EPROM), an electrically erasable programmable read-only memory (electrically EPROM, EEPROM), or a flash memory. The volatile memory may be a random access memory (random access memory, RAM), used as an external cache. For example but not limitation, many forms of RAMs may be used, such as a static random access memory (static RAM, SRAM), a dynamic random access memory (dynamic RAM, DRAM), a synchronous dynamic random access memory (synchronous DRAM, SDRAM), a double data rate synchronous dynamic random access memory (double data rate SDRAM, DDR SDRAM), an enhanced synchronous dynamic random access memory (enhanced SDRAM, ESDRAM), a synchlink dynamic random access memory (synchlink DRAM, SLDRAM), and a direct rambus random access memory (direct rambus RAM, DR RAM). It should be noted that the memory of the systems and methods described in this specification includes but is not limited to these and any memory of another proper type.

All or some of the foregoing embodiments may be implemented by using software, hardware, firmware, or any combination thereof. When software is used to implement the embodiments, all or a part of the embodiments may be implemented in a form of a computer program product. The computer program product includes one or more computer instructions. When the computer instructions are loaded and executed on the computer, the procedure or functions according to embodiments of this application are all or partially generated. The computer may be a general-purpose computer, a dedicated computer, a computer network, or other programmable apparatuses. The computer instructions may be stored in a computer-readable storage medium or may be transmitted from a computer-readable storage medium to another computer-readable storage medium. For example, the computer instructions may be transmitted from a website, computer, server, or data center to another website, computer, server, or data center in a wired (for example, a coaxial cable, an optical fiber, or a digital subscriber line (digital subscriber line, DSL)) or wireless (for example, infrared, radio, or microwave) manner. The computer-readable storage medium may be any usable medium accessible by the computer, or a data storage device, for example, a server or a data center, integrating one or more usable media. The usable medium may be a magnetic medium (for example, a floppy disk, a hard disk drive, or a magnetic tape), an optical medium (for example, a high-density digital video disc (digital video disc, DVD)), a semiconductor medium (for example, a solid-state drive (solid-state disc, SSD)), or the like.

The units in the foregoing apparatus embodiments totally correspond to the electronic devices in the method embodiments, and corresponding modules or units perform corresponding steps. For example, the communication unit (transceiver) performs receiving or sending steps in the method embodiments, and steps other than sending and receiving steps may be performed by the processing unit (processor). For a function of a specific unit, refer to a corresponding method embodiment. There may be one or more processors.

It may be understood that in embodiments of this application, the electronic device may perform some or all steps in embodiments of this application. These steps or operations are merely examples. In embodiments of this application, other operations or variations of various operations may be performed. In addition, the steps may be performed in a sequence different from a sequence presented in embodiments of this application, and not all the operations in embodiments of this application may be performed.

A person of ordinary skill in the art may be aware that, in combination with the examples described in embodiments disclosed in this specification, units and algorithm steps may be implemented by electronic hardware or a combination of computer software and electronic hardware. Whether the functions are performed by hardware or software depends on particular applications and design constraint conditions of the technical solutions. A person skilled in the art may use different methods to implement the described functions for each particular application, but it should not be considered that the implementation goes beyond the scope of this application.

It may be clearly understood by a person skilled in the art that, for the purpose of convenient and brief description, for a detailed working process of the foregoing system, apparatus, and unit, refer to a corresponding process in the foregoing method embodiments. Details are not described herein again.

In the several embodiments provided in this application, it should be understood that the disclosed system, apparatus, and method may be implemented in other manners. For example, the described apparatus embodiments are merely examples. For example, division into the units is merely logical function division. There may be another division manner during actual implementation. For example, a plurality of units or components may be combined or integrated into another system, or some features may be ignored or not performed. In addition, the displayed or discussed mutual couplings or direct couplings or communication connections may be implemented through some interfaces. The indirect couplings or communication connections between the apparatuses or units may be implemented in electronic, mechanical, or other forms.

The units described as separate parts may or may not be physically separate, and parts displayed as units may or may not be physical units, may be located in one position, or may be distributed on a plurality of network units. Some or all of the units may be selected based on actual requirements to achieve the objectives of the solutions of embodiments.

In addition, functional units in embodiments of this application may be integrated into one processing unit, or each of the units may exist alone physically, or two or more units may be integrated into one unit.

When the functions are implemented in the form of a software functional unit and sold or used as an independent product, the functions may be stored in a computer-readable storage medium. Based on such an understanding, the technical solutions of this application essentially, or the part contributing to the conventional technology, or some of the technical solutions may be implemented in a form of a software product. The computer software product is stored in a storage medium and includes several instructions for instructing a computer device (which may be a personal computer, a server, a network device, or the like) to perform all or some of the steps of the methods described in embodiments of this application. The foregoing storage medium includes any medium that can store program code, such as a USB flash drive, a removable hard disk, a read-only memory ROM, a random access memory RAM, a magnetic disk, or an optical disc.

The foregoing descriptions are merely specific implementations of this application, but are not intended to limit the protection scope of this application. Any variation or replacement readily figured out by a person skilled in the art within the technical scope disclosed in this application shall fall within the protection scope of this application.

## Claims

1. A communication method, comprising:
generating a first communication frame, wherein the first communication frame comprises first information and second information, the first information indicates first time information corresponding to a first access point AP, the second information indicates an offset between the first time information and second time information, and the second time information is start time of a restricted target wake time service period RTWT SP of a second AP; and
sending the first communication frame.

2. A communication method, comprising:
receiving a first communication frame, wherein the first communication frame comprises first information and second information, the first information indicates first time information corresponding to a first access point AP, the second information indicates an offset between the first time information and second time information, and the second time information is start time of a restricted target wake time service period RTWT SP of a second AP; and
parsing the first communication frame.

3. The method according to claim 1 or 2, wherein the second information comprises first indication information, the first indication information comprises M bits of a time synchronization function timer TSF timer of the first AP, the TSF timer of the first AP corresponds to the second time information, and the M bits are a part or all of 10 least significant bits of the TSF timer of the first AP.

4. The method according to any one of claims 1 to 3, wherein the first communication frame comprises a target wake time TWT element, and the target wake time TWT element comprises the second information.

5. The method according to any one of claims 1 to 4, wherein the TWT element in the first communication frame comprises a broadcast TWT parameter set, and the second information is carried in any one or more of the following locations in the broadcast TWT parameter set:
a 5^{th} byte in the broadcast TWT parameter set, a 4^{th} bit to an 8^{th} bit in a broadcast TWT information field in the broadcast TWT parameter set, and a first field after the broadcast TWT information field in the broadcast TWT parameter set.

6. The method according to claim 1 or 2, wherein the second information comprises second indication information, the second indication information comprises N bits, a value of the N bits is an integer ranging from 0 to 1023, N is a positive integer less than or equal to 10, and the value of the N bits indicates the offset between the first time information and the second time information.

7. The method according to claim 6, wherein the second time information is determined based on RTWT information of the second AP, and the RTWT information of the second AP is from a communication frame of the second AP.

8. The method according to any one of claims 1 to 7, wherein the TWT element in the first communication frame comprises third indication information, and the third indication information indicates that TWT information of the second AP exists in the TWT element.

9. The method according to claim 8, wherein the third indication information is carried in any one or more of the following locations in the TWT element:
an 8^{th} bit in a control field in the TWT element and a 16^{th} bit in a request type field in the broadcast TWT parameter set in the TWT element.

10. The method according to any one of claims 1 to 9, wherein the first communication frame is a beacon frame; or
the first communication frame is a communication frame in response to a probe request frame, and the probe request frame is from a first non-access point station non-AP STA.

11. A communication method, comprising:
generating a second communication frame, wherein the second communication frame comprises third information and fourth information, the third information indicates third time information corresponding to a second access point AP, the fourth information indicates a part or all of bits of a time synchronization function timer TSF timer of the second AP, or indicates an offset between a TSF timer of the second AP and a TSF timer of a first AP, and the third time information corresponds to start time of a restricted target wake time service period RTWT SP of the second AP; and
sending the second communication frame.

12. A communication method, comprising:
receiving a second communication frame, wherein the second communication frame comprises third information and fourth information, the third information indicates third time information corresponding to a second access point AP, the fourth information indicates a part or all of bits of a time synchronization function timer TSF timer of the second AP, or indicates an offset between a TSF timer of the second AP and a TSF timer of a first AP, and the third time information corresponds to start time of a restricted target wake time service period RTWT SP of the second AP; and
parsing the second communication frame.

13. The method according to claim 11 or 12, wherein the second communication frame comprises a target wake time TWT element, and the target wake time TWT element comprises the fourth information.

14. The method according to any one of claims 11 to 13, wherein the TWT element in the second communication frame comprises a broadcast TWT parameter set, and the fourth information is carried in any one or more of the following locations in the broadcast TWT parameter set:
a 5^{th} byte in the broadcast TWT parameter set, a 4^{th} bit to an 8^{th} bit in a broadcast TWT information field in the broadcast TWT parameter set, and a second field after the broadcast TWT information field in the broadcast TWT parameter set.

15. The method according to any one of claims 11 to 14, wherein P most significant bits of the TSF timer of the second AP are the same as P most significant bits of the TSF timer of the first AP, and P is a positive integer less than 64.

16. The method according to any one of claims 11 to 15, wherein the TWT element in the second communication frame comprises third indication information, and the third indication information indicates that TWT information of the second AP exists in the TWT element.

17. The method according to claim 16, wherein the third indication information is carried in any one or more of the following locations in the TWT element:
an 8^{th} bit in a control field in the TWT element and a 16^{th} bit in a request type field in the broadcast TWT parameter set in the TWT element.

18. The method according to any one of claims 11 to 17, wherein the second communication frame is a beacon frame; or
the second communication frame is a communication frame in response to a probe request frame, and the probe request frame is from a first non-access point station non-AP STA.

19. A communication method, comprising:
generating a third communication frame, wherein the third communication frame comprises third information and fifth information, the third information indicates third time information corresponding to a second access point AP, the fifth information indicates an identifier of the second AP, there is a mapping relationship between the identifier of the second AP and a time synchronization function timer TSF timer of the second AP, and the third time information corresponds to start time of a restricted target wake time service period RTWT SP of the second AP; and
sending the third communication frame.

20. A communication method, comprising:
receiving a third communication frame, wherein the third communication frame comprises third information and fifth information, the third information indicates third time information corresponding to a second access point AP, the fifth information indicates an identifier of the second AP, there is a mapping relationship between the identifier of the second AP and a time synchronization function timer TSF timer of the second AP, and the third time information corresponds to start time of a restricted target wake time service period RTWT SP of the second AP; and
parsing the third communication frame.

21. The method according to claim 19 or 20, wherein the third communication frame comprises a target wake time TWT element, and the target wake time TWT element comprises the fifth information.

22. The method according to any one of claims 19 to 21, wherein the TWT element in the third communication frame comprises a broadcast TWT parameter set, and the fifth information is carried in any one or more of the following locations in the broadcast TWT parameter set:
a 5^{th} byte in the broadcast TWT parameter set and a 4^{th} bit to an 8^{th} bit in a broadcast TWT information field in the broadcast TWT parameter set.

23. The method according to any one of claims 19 to 22, wherein information about the mapping relationship is carried in a field other than the TWT element in the third communication frame, or information about the mapping relationship is carried in a communication frame different from the third communication frame.

24. The method according to any one of claims 19 to 23, wherein the TWT element in the third communication frame comprises third indication information, and the third indication information indicates that TWT information of the second AP exists in the TWT element.

25. The method according to claim 24, wherein the third indication information is carried in one or more of the following locations in the TWT element:
an 8^{th} bit in a control field in the TWT element and a 16^{th} bit in a request type field in the broadcast TWT parameter set in the TWT element.

26. The method according to any one of claims 19 to 25, wherein the third communication frame is a beacon frame; or
the third communication frame is a communication frame in response to a probe request frame, and the probe request frame is from a first non-access point station non-AP STA.

27. A communication method, comprising:
generating a fourth communication frame, wherein the fourth communication frame comprises sixth information, the sixth information indicates 16 consecutive bits of a time synchronization function timer TSF timer of a first access point AP, a least significant bit in the 16 consecutive bits is any one of 10 least significant bits in the TSF timer of the first AP, and the TSF timer of the first AP corresponds to start time of a restricted target wake time service period RTWT SP of a second AP; and
sending the fourth communication frame.

28. A communication method, comprising:
receiving a fourth communication frame, wherein the fourth communication frame comprises sixth information, the sixth information indicates 16 consecutive bits of a time synchronization function timer TSF timer of a first access point AP, a least significant bit in the 16 consecutive bits is any one of 10 least significant bits in the TSF timer of the first AP, and the TSF timer of the first AP corresponds to start time of a restricted target wake time service period RTWT SP of a second AP; and
parsing the fourth communication frame.

29. The method according to claim 27 or 28, wherein the fourth communication frame comprises a target wake time TWT element, the target wake time TWT element comprises the sixth information, and a broadcast TWT parameter set in the TWT element carries RTWT information of the second AP.

30. The method according to any one of claims 27 to 29, wherein the fourth communication frame further comprises seventh information, and the seventh information indicates a correspondence between the least significant bit in the 16 consecutive bits and a bit in the TSF of the first AP.

31. The method according to any one of claims 27 to 30, wherein the fourth communication frame further comprises eighth information, and the eighth information indicates that time indicated by the 16 consecutive bits is indicated based on the TSF timer of the first AP, or is indicated based on a TSF timer of the second AP.

32. The method according to any one of claims 27 to 31, wherein the fourth communication frame is a beacon frame; or
the fourth communication frame is a communication frame in response to a probe request frame, and the probe request frame is from a first non-access point station non-AP STA.

33. A communication apparatus, comprising a module or a unit configured to perform the method according to any one of claims 1 to 32.

34. A communication apparatus, comprising a processor, wherein
when the processor invokes a computer program or instructions in a memory, the method according to any one of claims 1 to 32 is performed.

35. A communication apparatus, comprising a logic circuit and an interface, wherein the logic circuit is coupled to the interface, the interface is configured to input and/or output code instructions, and the logic circuit is configured to execute the code instructions, to enable the method according to any one of claims 1 to 32 to be performed.

36. A computer-readable storage medium, wherein
the computer-readable storage medium is configured to store instructions or a computer program; and when the instructions or the computer program is executed, the method according to any one of claims 1 to 32 is implemented.

37. A communication system, comprising a first communication apparatus and a second communication apparatus, wherein
the first communication apparatus is configured to perform the method according to any one of claims 1, 3 to 10, 11, 13 to 18, 19, 21 to 26, 27, and 29 to 32, and the second communication apparatus is configured to perform the method according to any one of claims 2, 3 to 10, 12, 13 to 18, 20, 21 to 26, 28, and 29 to 32.
